# EUROPEAN PATENT SPECIFICATION

(11) **EP 4 283 647 B1**
(45) Date of publication and mention of the grant of the patent: **26.11.2025**
(21) Application number: 21920941.8
(22) Date of filing: 19.01.2021
(51) Int. Cl.: H01H 33/59, H02J 1/00, H01H 9/54, H02H 3/02, H02H 3/087, H02H 7/26

(54) **DC CURRENT BREAKER**
GLEICHSTROMSCHUTZSCHALTER
DISJONCTEUR À COURANT CC

(43) Date of publication of application: 29.11.2023
(73) Proprietor: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: HAMAJIMA, Shinnosuke, Kawasaki-shi, Kanagawa 212-0013 (JP); KOYAMA, Yushi, Kawasaki-shi, Kanagawa 212-0013 (JP); ISHIGURO, Takahiro, Kawasaki-shi, Kanagawa 212-0013 (JP)
(74) Representative: AWA Sweden AB
(86) International application number: PCT/JP2021/001640
(87) International publication number: WO 2022/157824

(56) References cited:
- EP-A1- 3 540 750
- WO-A1-2019/035180
- JP-A- 2016 167 406
- JP-A- 2017 004 869
- JP-A- 2020 013 657

## Description

### [Technical Field]

Embodiments of the present invention relate to a direct current (DC) circuit breaker.

### [Background Art]

In recent years, there has been progress in the study and implementation of DC power transmission systems for DC power transmission. Compared to conventional alternating current (AC) transmission systems, DC power transmission systems can be constructed to be cost-effectively installable and highly efficient with minimal power loss when applied to long-distance high-power transmission. On the other hand, it is difficult to interrupt and isolate a part where a system fault has occurred in a DC power transmission system in which a plurality of power generation terminals are connected. This is because a point where the current crosses zero (zero point) does not occur in a DC current and the current cannot be easily interrupted at mechanical contacts. In order to solve this, DC circuit breakers having various configurations that actively create a current zero point at mechanical contacts are being studied. When a fault occurs in a DC power transmission line, the DC circuit breaker disconnects the DC power transmission line (fault circuit) where the fault has occurred by opening the DC circuit breaker belonging to the DC power transmission line and maintains power transmission with a DC power transmission line (faultless circuit) other than the fault circuit.

As one form of a DC circuit breaker, there is a hybrid type DC circuit breaker configured by combining a mechanical contact type breaker, a semiconductor breaker composed of semiconductors, and the like. In the hybrid type DC circuit breaker, a fault current flowing through a mechanical contact type breaker is commutated to a semiconductor element capable of implementing arc self-extinction and the current zero point is actively created, and therefore the mechanical contact type breaker is shifted to an electrically disconnected state and the fault current is interrupted in the semiconductor breaker in this state.

In the hybrid type DC circuit breaker, a mechanical contact type circuit breaker or a semiconductor breaker is provided for a DC power transmission line. For this reason, in a hybrid type DC circuit breaker applied to a DC power transmission system having a plurality of DC power transmission lines, mechanical contact type circuit breakers or semiconductor breakers equal in number to the DC power transmission lines are provided. However, semiconductor breakers are expensive components among hybrid DC circuit breakers. This is because in the DC power transmission system, the voltage transmitted by the DC power transmission line is high, so it is necessary to implement a high-voltage semiconductor breaker having a withstand voltage higher than that of the DC power transmission line. Thus, a configuration in which the semiconductor breaker is shared by a plurality of DC power transmission lines is considered in a multi-terminal hybrid type DC circuit breaker.

### [Citation List]

### [Patent Document]

[Patent Document 1]
European Patent No. 3,342,017B1

### [Summary of Invention]

### [Technical Problem]

An objective of the present invention is to provide a DC circuit breaker that is applied to a multi-terminal DC transmission system and is capable of interrupting a DC power transmission line where a fault occurs after a semiconductor breaker is shared.

### [Solution to Problem]

According to an embodiment, a DC circuit breaker includes a plurality of DC power transmission lines, an interruption and consumption unit, a plurality of opening and closing commutation units, a first DC bus, and a second DC bus. The DC power transmission line branches into a first auxiliary line and a second auxiliary line each having a first mechanical contact at a predetermined branch point. The interruption and consumption unit includes a semiconductor breaker configured to interrupt a current flowing through the DC power transmission line and an energy consumption element configured to consume at least energy between a first end of the semiconductor breaker and a second end opposite the first end. The opening and closing commutation unit corresponds to the first auxiliary line or the second auxiliary line. The first DC bus connects a first terminal of the first mechanical contact belonging to each first auxiliary line to a first end of the interruption and consumption unit. The second DC bus connects a first terminal of the first mechanical contact belonging to each second auxiliary line to a second end opposite the first end of the interruption and consumption unit. EP-A-3540750 discloses a prior art DC circuit breaker.

### [Brief Description of Drawings]

FIG. 1 is a diagram showing an example of a configuration of a DC circuit breaker according to a first embodiment.
FIG. 2A is a diagram showing an example of a configuration of a modified example of a semiconductor breaker and an arrester provided in the DC circuit breaker of the first embodiment.
FIG. 2B is a diagram showing an example of a configuration of a modified example of a semiconductor breaker and an arrester provided in the DC circuit breaker of the first embodiment.
FIG. 2C is a diagram showing an example of a configuration of a modified example of the semiconductor switch unit in the semiconductor breaker provided in the DC circuit breaker of the first embodiment.
FIG. 2D is a diagram showing an example of a configuration of a modified example of the semiconductor switch unit in the semiconductor breaker provided in the DC circuit breaker of the first embodiment.
FIG. 3 is a diagram for describing a first operation of the DC circuit breaker of the first embodiment.
FIG. 4 is a diagram for describing the first operation of the DC circuit breaker of the first embodiment.
FIG. 5 is a diagram for describing the first operation of the DC circuit breaker of the first embodiment.
FIG. 6 is a diagram for describing the first operation of the DC circuit breaker of the first embodiment.
FIG. 7 is a diagram for describing the first operation of the DC circuit breaker of the first embodiment.
FIG. 8 is a diagram for describing the first operation of the DC circuit breaker of the first embodiment.
FIG. 9 is a diagram for describing the first operation of the DC circuit breaker of the first embodiment.
FIG. 10 is a diagram for describing the first operation of the DC circuit breaker of the first embodiment.
FIG. 11 is a diagram for describing the first operation of the DC circuit breaker of the first embodiment.
FIG. 12 is a diagram for describing a second operation of the DC circuit breaker of the first embodiment.
FIG. 13 is a diagram for describing the second operation of the DC circuit breaker of the first embodiment.
FIG. 14 is a diagram for describing the second operation of the DC circuit breaker of the first embodiment.
FIG. 15 is a diagram for describing the second operation of the DC circuit breaker of the first embodiment.
FIG. 16 is a diagram for describing the second operation of the DC circuit breaker of the first embodiment.
FIG. 17 is a diagram for describing the second operation of the DC circuit breaker of the first embodiment.
FIG. 18 is a diagram showing an example of a configuration of a first modified example of the DC circuit breaker of the first embodiment.
FIG. 19 is a diagram showing an example of a configuration of a second modified example of the DC circuit breaker of the first embodiment.
FIG. 20 is a diagram showing an example of a configuration of a DC circuit breaker according to a second embodiment.
FIG. 21 is a diagram showing an example of a configuration of a DC circuit breaker according to a third embodiment.
FIG. 22 is a diagram for describing a third operation of the DC circuit breaker of the third embodiment.
FIG. 23 is a diagram for describing the third operation of the DC circuit breaker of the third embodiment.
FIG. 24 is a diagram for describing the third operation of the DC circuit breaker of the third embodiment.
FIG. 25 is a diagram for describing the third operation of the DC circuit breaker of the third embodiment.
FIG. 26 is a diagram for describing the third operation of the DC circuit breaker of the third embodiment.
FIG. 27 is a diagram for describing the third operation of the DC circuit breaker of the third embodiment.
FIG. 28 is a diagram for describing the third operation of the DC circuit breaker of the third embodiment.
FIG. 29 is a diagram for describing the third operation of the DC circuit breaker of the third embodiment.
FIG. 30 is a diagram for describing the third operation of the DC circuit breaker of the third embodiment.

### [Description of Embodiments]

Hereinafter, embodiments of a DC circuit breaker will be described with reference to the drawings.

### (First embodiment)

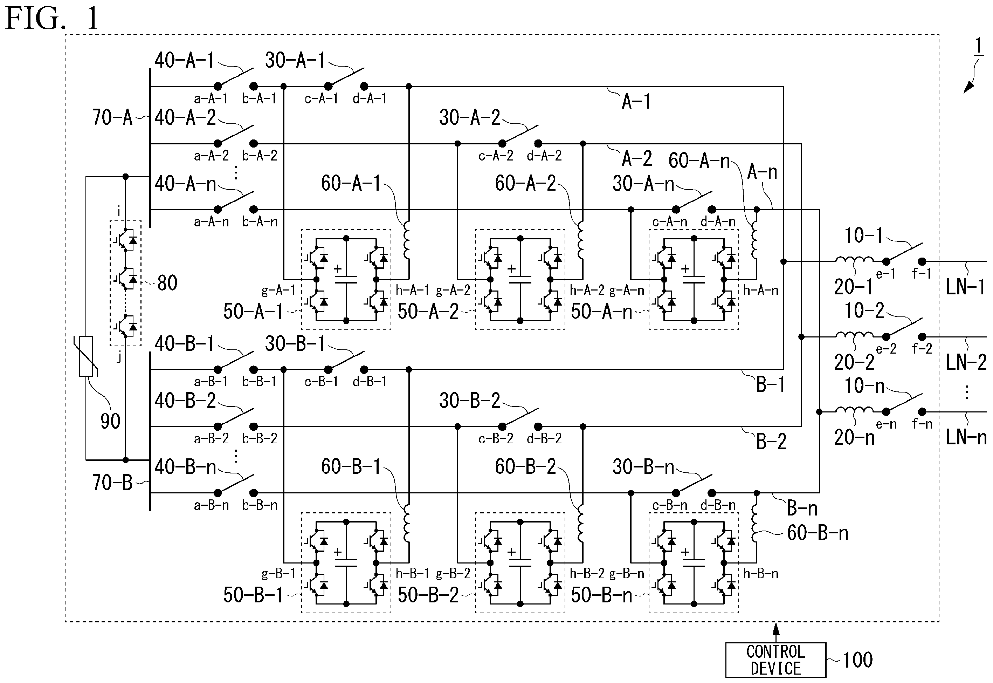

FIG. 1 is a diagram showing an example of a configuration of a DC circuit breaker according to a first embodiment. In FIG. 1, an example of a DC circuit breaker 1 configured at node portions of a plurality of DC power transmission lines LN (DC power transmission lines LN-1 to LN-n) is shown. In the DC circuit breaker 1, each DC power transmission line LN branches into an auxiliary line A and an auxiliary line B at a predetermined point and auxiliary lines A or auxiliary lines B are connected to transmit a DC current (hereinafter simply referred to as a "current") between the DC power transmission lines LN. In FIG. 1, a hyphen (-) following each reference sign and a number following the hyphen are added to indicate a DC power transmission line LN of the DC power transmission lines LN-1 to LN-n corresponding to a component provided in the DC circuit breaker 1. Furthermore, in FIG. 1, a hyphen (-) following each reference sign and the letter "A" or "B" following the hyphen are added to indicate one of the auxiliary line A and the auxiliary line B corresponding to a component provided in the DC circuit breaker 1. In the following description, when it is unnecessary to distinguish which DC power transmission line LN or which auxiliary line corresponds to the component, the hyphen attached to the reference sign of each component and the letter or the number following the hyphen are omitted.

The DC circuit breaker 1 includes, for example, a plurality of auxiliary disconnectors 10 (auxiliary disconnectors 10-1 to 10-n), a plurality of DC reactors 20 (DC reactors 20-1 to 20-n), a plurality of breakers 30 (breakers 30-A-1 to 30-A-n and breakers 30-B-1 to 30-B-n), a plurality of disconnectors 40 (disconnectors 40-A-1 to 40-A-n and disconnectors 40-B-1 to 40-B-n), a plurality of commutation circuits 50 (commutation circuits 50-A-1 to 50-A-n and commutation circuits 50-B-1 to 50-B-n), a plurality of inductors 60 (inductors 60-A-1 to 60-A-n and inductors 60-B-1 to 60-B-n), two DC buses 70 (DC buses 70-A and 70-B), a semiconductor breaker 80, an arrester 90, and a control device 100.

In the DC circuit breaker 1, the auxiliary disconnector 10 and the DC reactor 20 are connected together in series with each DC power transmission line LN and each DC power transmission line LN branches into the two auxiliary lines (the auxiliary line A and the auxiliary line B) on a side opposite a power transmission side. In the DC circuit breaker 1, the breaker 30 and the disconnector 40 are connected together in series with each auxiliary line. For example, in the DC power transmission line LN-1, a second terminal f-1 of an auxiliary disconnector 10-1 is connected to the power transmission side, a first terminal e-1 of the auxiliary disconnector 10-1 and a second end of the DC reactor 20 are connected, and the DC power transmission line LN-1 branches into an auxiliary line A-1 and an auxiliary line B-1 on a first end side of the DC reactor 20. In the auxiliary line A-1, a second terminal d-A-1 of a breaker 30-A-1 is connected to the first end side of the DC reactor 20 and a first terminal c-A-1 of the breaker 30-A-1 and a second terminal b-A-1 of a disconnector 40-A-1 are connected. On the other hand, in the auxiliary line B-1, a second terminal d-B-1 of the breaker 30-B-1 is connected to the first end side of the DC reactor 20, and a first terminal c-B-1 of the breaker 30-B-1 and a second terminal b-B-1 of the disconnector 40-B-1 are connected. The same is also true for the DC power transmission lines LN-2 to LN-n. The auxiliary line A is an example of a "first auxiliary line" in the claims and the auxiliary line B is an example of a "second auxiliary line" in the claims. The disconnector 40 is an example of a "first mechanical contact" in the claims and the breaker 30 is an example of a "second mechanical contact" in the claims.

In the DC circuit breaker 1, disconnectors 40 connected to auxiliary lines of each DC power transmission line LN are connected to corresponding DC buses 70. More specifically, first terminals a-A-1 to a-A-n of the disconnectors 40-A-1 to 40-A-n connected to the auxiliary lines A-1 to A-n of the DC power transmission lines LN are connected to the DC bus 70-A. On the other hand, first terminals a-B-1 to a-B-n of the disconnectors 40-B-1 to 40-B-n connected to the auxiliary lines B-1 to B-n of the DC power transmission lines LN are connected to the DC bus 70-B. In the normal power transmission in the DC circuit breaker 1, a current flows through the auxiliary disconnector 10 and the DC reactor 20 belonging to each DC power transmission line LN and further through each of the breaker 30, the disconnector 40, and the DC bus 70 on the auxiliary line branched from each DC power transmission line LN. The DC bus 70-A is an example of a "first DC bus" in the claims and the DC bus 70-B is an example of a "second DC bus" in the claims.

Further, in the DC circuit breaker 1, the commutation circuit 50 and the inductor 60 are connected together in series between both terminals that are a first terminal c and a second terminal d of the breaker 30 in each auxiliary line. That is, in the DC circuit breaker 1, a series circuit of the commutation circuit 50 and the inductor 60 is provided in parallel to the breaker 30. For example, in the auxiliary line A-1, a first end g-A-1 of the commutation circuit 50-A-1 is connected to the auxiliary line A-1 at a location between a first terminal c-A-1 of the breaker 30-A-1 and a second terminal b-A-1 of the disconnector 40-A-1, a first end of the inductor 60-A-1 is connected to a second end h-A-1 of the commutation circuit 50-A-1, and a second end of the inductor 60-A-1 is connected to the auxiliary line A-1 of a second terminal d-A-1 side of the breaker 30-A-1. The same is also true for the auxiliary lines A-2 to A-n and the auxiliary lines B-1 to B-n. The commutation circuit 50 is an example of a "commutation circuit" in the claims. A configuration of the breaker 30 and the commutation circuit 50 (which may include the inductor 60) is an example of an "opening and closing commutation unit" in the claims.

In the DC circuit breaker 1, the DC buses 70 to which the auxiliary lines into which each DC power transmission line LN branches are connected are connected to each other via the semiconductor breaker 80 and the arrester 90. More specifically, the DC bus 70-A is connected to a first end i of the semiconductor breaker 80 and a first end of the arrester 90 and the DC bus 70-B is connected to a second end j of the semiconductor breaker 80 and a second end of the arrester 90. Thereby, in the DC circuit breaker 1, the two auxiliary lines into which each DC power transmission line LN branches are connected to each other via the DC buses 70 and the semiconductor breaker 80 or the arrester 90 corresponding thereto. The semiconductor breaker 80 is an example of a "semiconductor breaker" in the claims and the arrester 90 is an example of an "energy consumption element" in the claims. A configuration of the semiconductor breaker 80 and the arrester 90 is an example of an "interruption and consumption unit" in the claims.

The auxiliary disconnector 10, the breaker 30, and the disconnector 40 are mechanical contact switches. Each of the auxiliary disconnector 10, the breaker 30, and the disconnector 40 is controlled by the control device 100 so that it is in an open or closed state.

The DC reactor 20 suppresses a change in a current in the corresponding DC power transmission line LN when a fault has occurred in the DC power transmission line LN.

The semiconductor breaker 80 interrupts a current flowing from the first end i side to the second end j side. The semiconductor breaker 80 includes, for example, a plurality of semiconductor switch units (only three semiconductor switch units are shown in FIG. 1) connected in series. Each of the semiconductor switch units includes a semiconductor switching element and a diode connected in parallel to each other. More specifically, in the semiconductor switch unit, a cathode of the diode and a collector of the semiconductor switching element are connected to each other and an anode of the diode and an emitter of the semiconductor switching element are connected. A gate of the semiconductor switching element is controlled (a control voltage is applied) by the control device 100. That is, the semiconductor breaker 80 is controlled by the control device 100 so that it is in either an ON or OFF state. The semiconductor switching element is, for example, a switching element such as an insulated gate bipolar transistor (IGBT). The semiconductor switching element is not limited to the IGBT and may be any switching element as long as it is a semiconductor switching element capable of implementing arc self-extinction. The semiconductor breaker 80 allows the current to flow between the DC bus 70-A and the DC bus 70-B when it is in the ON state (conductive state) and interrupts the current that flows when it is in the OFF state (non-conductive state). The ON state of the semiconductor breaker 80 is an example of a "conductive state" in the claims.

When the arrester 90 is connected in parallel to the semiconductor breaker 80 and the semiconductor breaker 80 is controlled so that it is in the OFF state, surge energy generated due to energy corresponding to an inductance component of the DC power transmission line LN, the auxiliary line A, or the auxiliary line B is consumed (absorbed).

In the DC circuit breaker 1, the first end i of the semiconductor breaker 80 and the first end of the arrester 90 are connected to the DC bus 70-A and the second end j of the semiconductor breaker 80 and the second end of the arrester 90 are connected to the DC bus 70-B. In the DC circuit breaker 1, in a configuration of the semiconductor breaker 80 and the arrester 90, a current from the DC bus 70-A side to the DC bus 70-B side is allowed or blocked (interrupted) in accordance with a control process of the control device 100 for the ON or OFF state of the semiconductor switch unit provided in the semiconductor breaker 80.

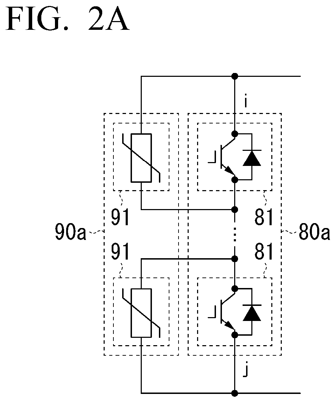

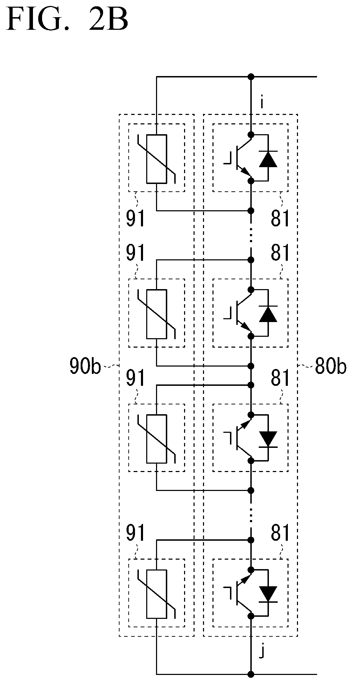

The configuration of the semiconductor breaker 80 and the arrester 90 provided in the DC circuit breaker 1 is not limited to the configuration shown in FIG. 1. FIGS. 2A and 2B are diagrams showing an example of a configuration of a modified example of the semiconductor breaker 80 and the arrester 90 provided in the DC circuit breaker 1 of the first embodiment. In FIG. 2A, an example of a semiconductor breaker 80a of a configuration in which a plurality of semiconductor switch units 81 (only two semiconductor switch units 81 are shown in FIG. 2A) are connected together in series with each other (a configuration similar to that of the semiconductor breaker 80 shown in FIG. 1) and an arrester 90a including a plurality of arresters 91 (only two arresters 91 are shown in FIG. 2A) respectively corresponding to the semiconductor switch units 81 provided in the semiconductor breaker 80a is shown. In a configuration of the semiconductor breaker 80a and the arrester 90a shown in FIG. 2A, as in the configuration of the semiconductor breaker 80 and the arrester 90 shown in FIG. 1, the current flowing from the first end i side to the second end j side of the semiconductor breaker 80a can be interrupted and surge energy can be consumed (absorbed). In FIG. 2B, an example of a semiconductor breaker 80b having a configuration in which a plurality of semiconductor switch units 81 (only four semiconductor switch units 81 are shown in FIG. 2B) are connected together in series in directions opposite each other and an arrester 90b including a plurality of arresters 91 (only four arresters 91 are shown in FIG. 2B) respectively corresponding to the semiconductor switch units 81 provided in the semiconductor breaker 80b is shown. In a configuration of the semiconductor breaker 80b and the arrester 90b shown in FIG. 2B, the interruption of the current flowing from the second end j side to the first end i side and the consumption (absorption) of energy can also be performed in addition to the interruption of the current flowing from the first end i side to the second end j side and the consumption (absorption) of energy similar to those in the configuration of the semiconductor breaker 80 and the arrester 90 shown in FIG. 1. That is, in the configuration of the semiconductor breaker 80b and the arrester 90b shown in FIG. 2B, the current (fault current) flowing in both directions in the DC power transmission line LN (fault circuit) where the fault has occurred can be interrupted and surge energy can be consumed (absorbed). A configuration of the semiconductor switch unit 81 provided in the semiconductor breaker 80a shown in FIG. 2A or the semiconductor breaker 80b shown in FIG. 2B is similar to that of the semiconductor switch unit provided in the semiconductor breaker 80 shown in FIG. 1.

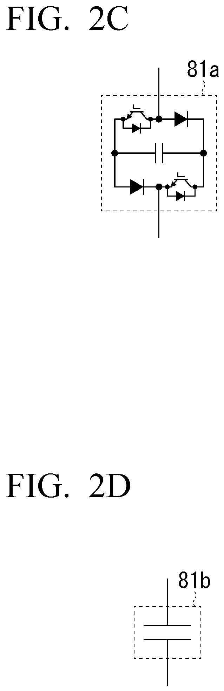

Here, the semiconductor switch unit 81 provided in the semiconductor breaker 80a shown in FIG. 2A or the semiconductor breaker 80b shown in FIG. 2B including the semiconductor switch unit provided in the semiconductor breaker 80 shown in FIG. 1 can be replaced with another configuration. FIGS. 2C and 2D are diagrams showing an example of a configuration of a modified example of the semiconductor switch unit 81 in the semiconductor breaker 80 provided in the DC circuit breaker 1 of the first embodiment. The semiconductor switch unit 81a shown in FIG. 2C includes two leg units, each of which is a series circuit in which one semiconductor switch unit and one diode are connected together in series, and one capacitor and is a bridge circuit in which these components are connected to each other. When the semiconductor switch unit 81 is replaced with the semiconductor switch unit 81a shown in FIG. 2C, a bidirectional fault current flowing between the first end i and the second end j can be interrupted in the semiconductor breaker 80, the semiconductor switch unit 81a, or the semiconductor switch unit 81b. The semiconductor switch unit 81b shown in FIG. 2D is composed of one capacitor. Even if the semiconductor switch unit 81 is replaced with the semiconductor switch unit 81b shown in FIG. 2D, the current flowing between the first end i and the second end j can be interrupted in the semiconductor breaker 80, the semiconductor switch unit 81a, and the semiconductor switch unit 81b. However, in the semiconductor switch unit 81b shown in FIG. 2D, the control device 100 cannot actively control ON and OFF and the arrester 90 consumes (absorbs) energy after the energy of the fault current stored in the capacitor is saturated, and therefore the speed is lowered when the current flowing between the first end i and the second j is interrupted. However, because the semiconductor switch unit 81b shown in FIG. 2D has a configuration that is simpler than that of each semiconductor switch unit 81 including a semiconductor switching element, the cost or size can be reduced when the semiconductor breaker 80, the semiconductor breaker 80a, or the semiconductor breaker 80b is configured.

The commutation circuit 50 selectively switches (commutates) the direction of the current flowing between the first end g and the second end h. The commutation circuit 50 includes, for example, two leg units that are series circuits in which two semiconductor switch units are connected together in series in the same direction as each other, and one capacitor and is a bridge circuit in which these components are connected to each other. Like the semiconductor switch unit provided in the semiconductor breaker 80, each semiconductor switch unit in the leg unit provided in the commutation circuit 50 includes, for example, semiconductor switching elements and diodes connected in parallel to each other. More specifically, in the semiconductor switch unit provided in the commutation circuit 50, the cathode of the diode and the collector of the semiconductor switching element are connected to each other and the anode of the diode and the emitter of the semiconductor switching element are connected. The gate of the semiconductor switching element is controlled (a control voltage is applied) by the control device 100. That is, like the semiconductor switch unit provided in the semiconductor breaker 80, the semiconductor switch unit provided in the commutation circuit 50 is controlled by the control device 100 so that it is in either an ON or OFF state. Like the semiconductor switching element of the semiconductor switch unit provided in the semiconductor breaker 80, the semiconductor switching element of the semiconductor switch unit provided in the commutation circuit 50 is, for example, a switching element such as an insulated gate bipolar transistor (IGBT). However, the semiconductor switching element of the semiconductor switch unit provided in the commutation circuit 50 may have a lower withstand voltage than the semiconductor switching element of the semiconductor switch unit provided in the semiconductor breaker 80. The semiconductor switching element of the semiconductor switch unit provided in the commutation circuit 50 is not limited to the IGBT, and may be any switching element as long as it is a semiconductor switching element capable of implementing arc self-extinction. The commutation circuit 50 causes a current flowing between the first end g and the second end h to become substantially zero by changing an electric current value of the current flowing between the first end g and the second end h in accordance with the control process of the control device 100 for either the ON or OFF state of the semiconductor switch unit. Thereby, the commutation circuit 50 disconnects an electrical connection between both terminals of the corresponding breaker 30. In the DC circuit breaker 1, the second end of the inductor 60 is connected between the second terminal d of the breaker 30 belonging to the corresponding auxiliary line and the first end of the DC reactor 20 belonging to the DC power transmission line LN before branching into the auxiliary lines. The inductor 60 prevents the capacitor provided in the corresponding commutation circuit 50 from being damaged when a fault has occurred in the DC power transmission line LN. The capacitor is an example of a "power storage element" in the claims.

The control device 100 controls the interruption and conduction of the DC power transmission line LN in the DC circuit breaker 1 by controlling the auxiliary disconnector 10, the breaker 30, the disconnector 40, the commutation circuit 50, and the semiconductor breaker 80. The control device 100 implements the following functions, for example, when a hardware processor such as a central processing unit (CPU) executes a program (software). Some or all functions of the control device 100 may be implemented by hardware (including a circuit unit; circuitry) such as a large-scale integration (LSI) circuit, an application-specific integrated circuit (ASIC), a field-programmable gate array (FPGA), or a graphics processing unit (GPU) or may be implemented by software and hardware in cooperation. Some or all functions of the control device 100 may be implemented by a dedicated LSI circuit. The program may be pre-stored in a storage device (a storage device including a non-transitory storage medium) such as a hard disk drive (HDD) or a flash memory provided in the control device 100 or may be stored in a removable storage medium (a non-transitory storage medium) such as a DVD or a CD-ROM and installed in the storage medium provided in the control device 100 when the storage medium is mounted in the drive device provided in the control device 100.

According to such a configuration, in the DC circuit breaker 1, after the semiconductor breaker 80, which is costly to implement a high withstand voltage, is shared by all DC power transmission lines LN, when a fault has occurred in any one of the DC power transmission lines LN, the DC power transmission line LN is interrupted.

### [First operation of interrupting DC power transmission line LN in DC circuit breaker 1]

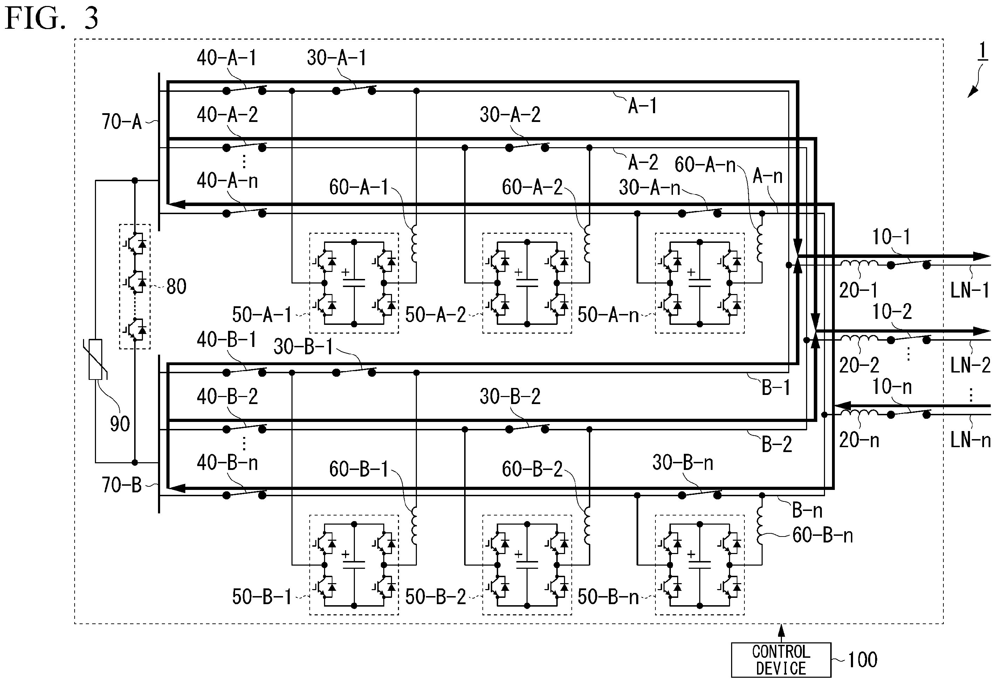

Here, referring to FIGS. 3 to 11, for example, a first operation in which the control device 100 interrupts the DC power transmission line LN-1 will be described as an example of a case where a fault has occurred in the DC power transmission line LN-1 when DC power transmission lines LN-1 to LN-n are connected to each other via the DC bus 70-A and the DC bus 70-B and the current is flowing from the DC power transmission line LN-n to the DC power transmission line LN-1 and the DC power transmission line LN-2. In FIGS. 3 to 11, the current flow within the DC circuit breaker 1 in a state in which each component is controlled by the control device 100 is shown.

In a steady power transmission state (initial state) in which the DC power transmission lines LN-1 to LN-n are connected to each other via the DC bus 70-A and the DC bus 70-B and power transmission is performed, all auxiliary disconnectors 10, breakers 30, and disconnectors 40 are closed, and the semiconductor switch units provided in all commutation circuits 50 and the semiconductor switch units provided in the semiconductor breaker 80 are all in the OFF state. In this case, in the DC circuit breaker 1, as shown in FIG. 3, the current flows from the DC power transmission line LN-n to the DC power transmission line LN-1 and the DC power transmission line LN-2 via the DC bus 70-A and the DC bus 70-B. Here, when a fault has occurred in the DC power transmission line LN-1, the control device 100 interrupts the DC power transmission line LN-1 where the fault has occurred by controlling an open state, a closed state, an ON state, and an OFF state of each component in the following procedures. In the following description, a DC power transmission line LN where a fault has occurred is also referred to as a "fault circuit" and a DC power transmission line LN other than the DC power transmission line LN where the fault has occurred, i.e., a DC power transmission line LN where no fault has occurred, is also referred to as a "faultless circuit."

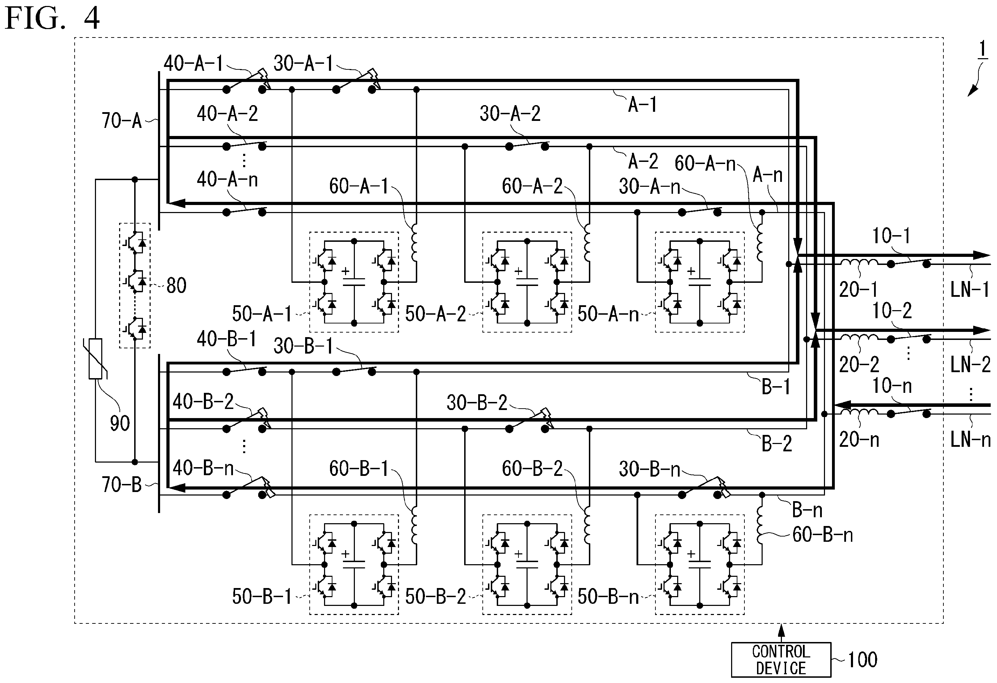

(Procedure 1-1): First, the control device 100 causes the breaker 30-A-1 and the disconnector 40-A-1 belonging to the auxiliary line A of the DC power transmission line LN-1 (fault circuit) where the fault has occurred to be in the open state. Further, the control device 100 causes the breaker 30-B-2 and the disconnector 40-B-2 belonging to the auxiliary line B of the DC power transmission line LN-2 (faultless circuit) where no fault has occurred and the breaker 30-B-n and the disconnector 40-B-n belonging to the auxiliary line B of the DC power transmission line LN-n (faultless circuit) to be in the open state. That is, the control device 100 causes a mechanical contact type switch belonging to the fault circuit in the auxiliary line A to be open and causes a mechanical contact type switch belonging to a faultless circuit in the auxiliary line B to be open. In this case, in the DC circuit breaker 1, as shown in FIG. 4, a current (fault current) flows from the DC power transmission line LN-n to the DC power transmission line LN-1 and the DC power transmission line LN-2 via the DC bus 70-A and the DC bus 70-B as well. This is because just opening each mechanical contact type switch does not cause the DC power transmission line LN to be electrically disconnected (disconnected state) due to the arc generated between contacts in each mechanical contact type switch.

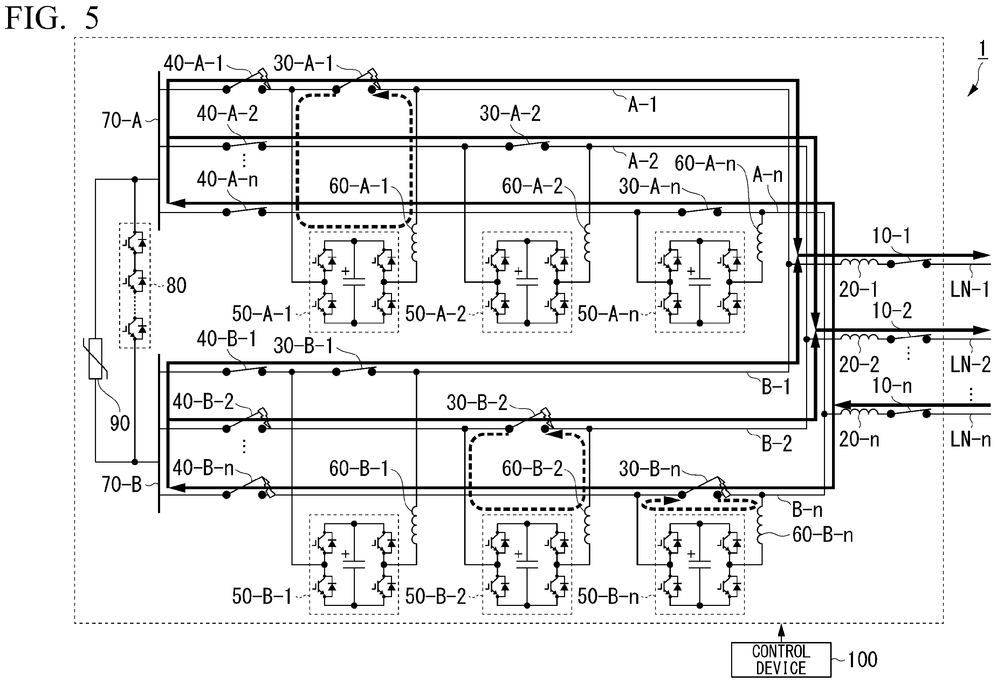

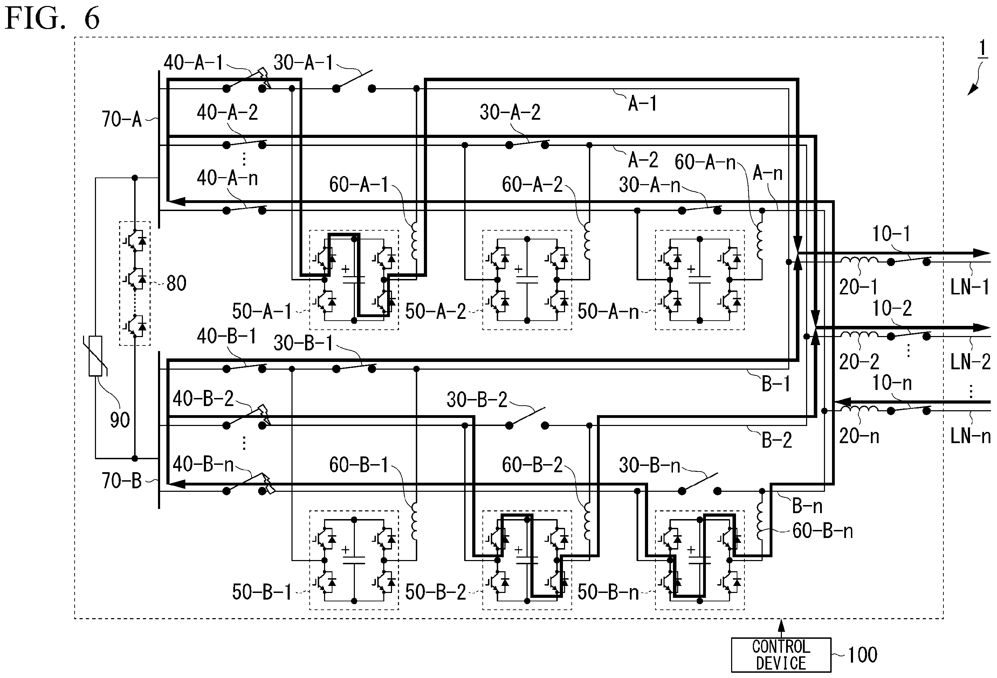

(Procedure 1-2): Subsequently, the control device 100 causes the commutation circuit 50 corresponding to the breaker 30 set in the open state to be operated. That is, the control device 100 causes the semiconductor switch unit provided in the commutation circuit 50 corresponding to the breaker 30 set in the open state to be in the ON state. Thereby, the capacitor provided in the commutation circuit 50 in which the semiconductor switch unit is turned on is discharged to supply electric charge and switches (commutates) the direction of the current flowing between the first end g and the second end h. In FIG. 5, a state in which the commutation circuit 50 corresponding to the breaker 30-A-1, the breaker 30-B-2, and the breaker 30-B-n set in the open state is operated is shown. Thereby, the fault current is commutated to the commutation circuit 50 and the fault current flowing through the breaker 30 set in the open state becomes substantially zero. Here, after the mechanical contact type switch is allowed to be open in the procedure 1-1, the fault current between the two terminals of the breaker 30 may be in the substantial zero state according to a direction in which the fault current flows (a power flow state). In this case, the control device 100 may not cause the commutation circuit 50 corresponding to the breaker 30 in the procedure 1-2 to be operated. In FIG. 6, a state in which the arc generated between the contacts of the corresponding breakers 30 (the breaker 30-A-1, the breaker 30-B-2, and the breaker 30-B-n) is extinguished due to the fault current flowing through the operated commutation circuit 50 is shown.

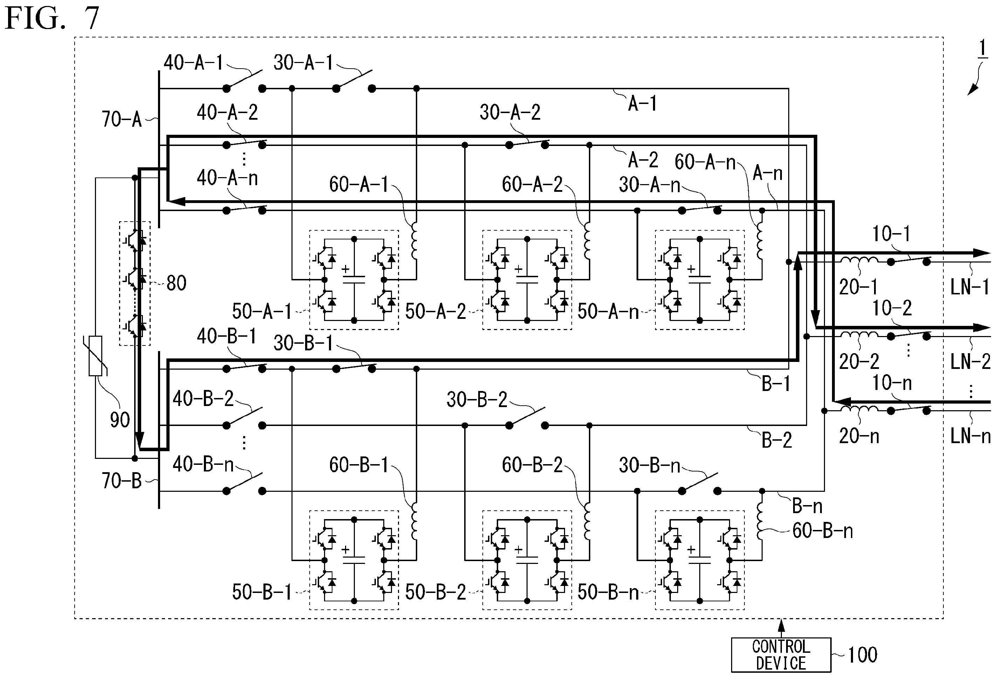

(Procedure 1-3): Subsequently, the control device 100 causes the semiconductor switch unit provided in the semiconductor breaker 80 to be in the ON state and causes the operation of the commutation circuit 50 that has been operated to be stopped. That is, the control device 100 causes the semiconductor switch unit provided in the commutation circuit 50 corresponding to the breaker 30 set in the open state to be in the OFF state. Thereby, in the DC circuit breaker 1, as shown in FIG. 7, the fault current in the DC power transmission line LN-1 is commutated to the semiconductor breaker 80 and the fault current flowing through the disconnector 40-A-1, the disconnector 40-B-2, and the disconnector 40-B-n becomes substantially zero. In FIG. 7, a state in which the arc generated between the contacts of the disconnector 40-A-1, the disconnector 40-B-2, and the disconnector 40-B-n is extinguished is shown. A timing for opening the disconnector 40-A-1, the disconnector 40-B-2, and the disconnector 40-B-n may be a timing of the procedure 1-3.

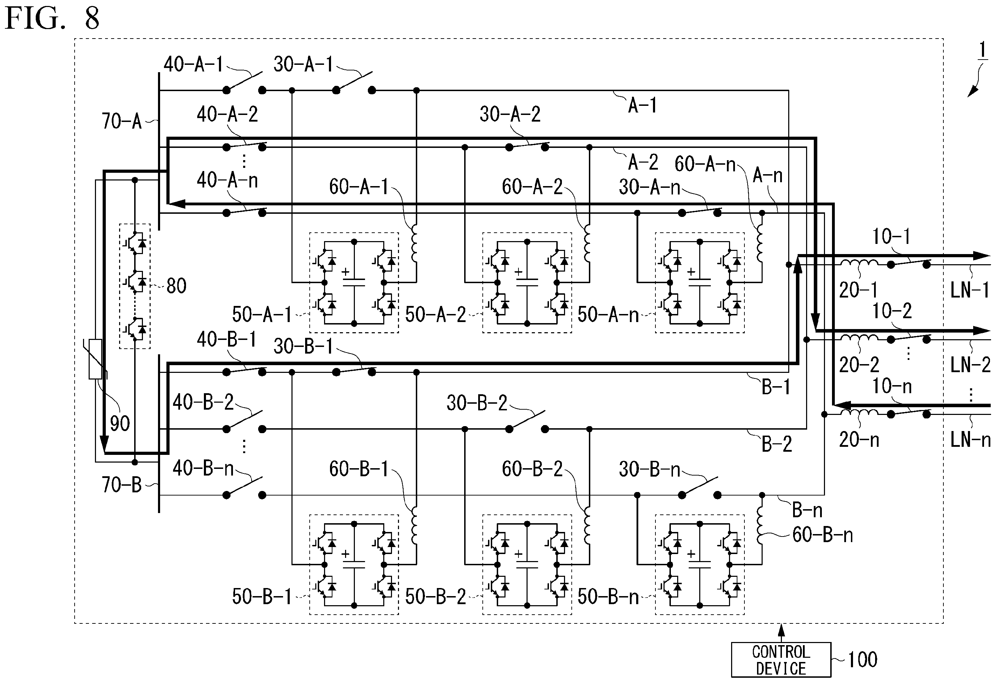

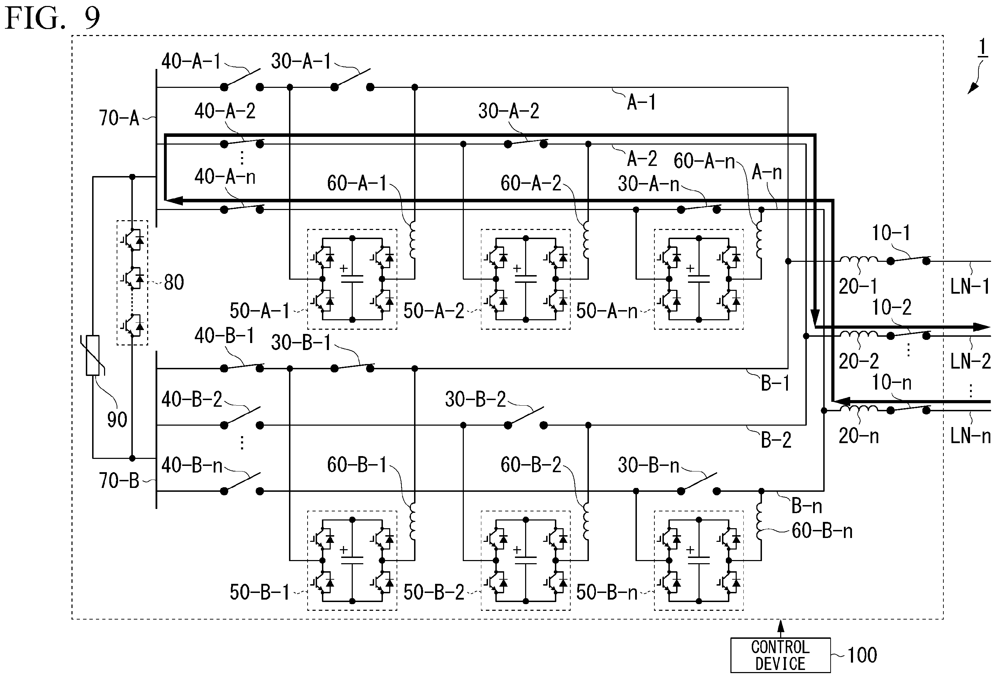

(Procedure 1-4): Subsequently, the control device 100 causes the semiconductor switch unit provided in the semiconductor breaker 80 to be in the OFF state. Thereby, in the DC circuit breaker 1, the fault current of the DC power transmission line LN-1 is interrupted and becomes substantially zero. Subsequently, in the DC circuit breaker 1, the fault current continues to flow for a while due to the surge energy stored in the inductance component in the line, but this surge energy is consumed by the arrester 90. In FIG. 8, a state in which a fault current of the DC power transmission line LN-1 flows through the arrester 90 is shown. In FIG. 9, a state in which the fault current of the DC power transmission line LN-1 is consumed by the arrester 90 and no longer flows is shown.

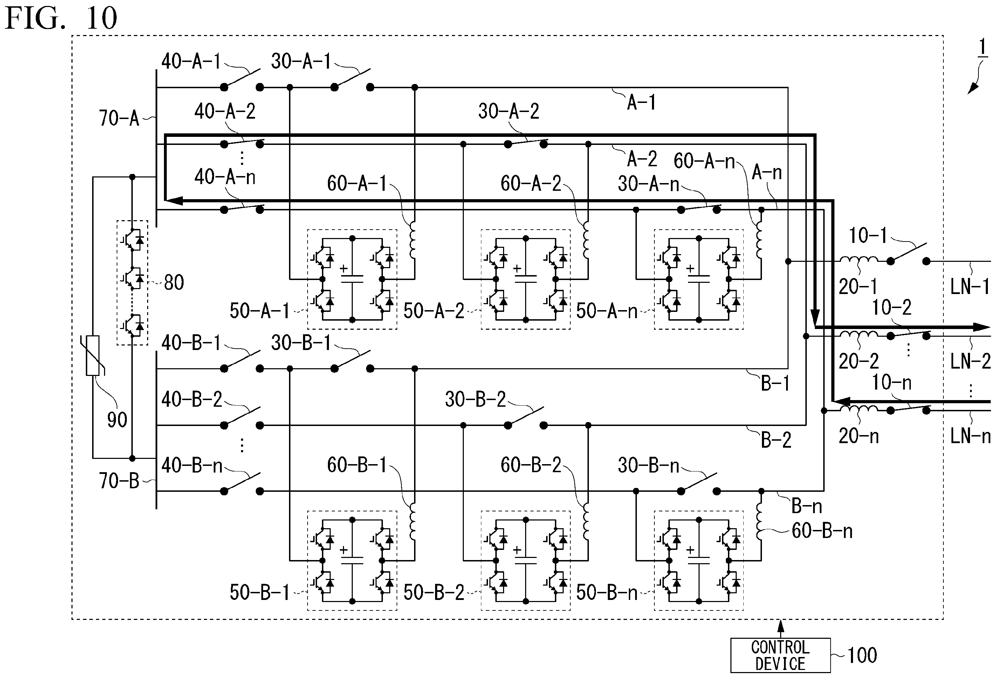

(Procedure 1-5): Subsequently, after the fault current flowing through the DC power transmission line LN-1 becomes zero (for example, after the elapse of the time for which it can be determined that the fault current flowing through the DC power transmission line LN-1 becomes zero), the control device 100 causes the auxiliary disconnector 10-1, the breaker 30-B-1, and the disconnector 40-B-1 belonging to the DC power transmission line LN-1 where the fault has occurred to be in the open state. That is, the control device 100 also causes a mechanical contact type switch belonging to the fault circuit to be open in the auxiliary line B of the DC power transmission line LN-1 where the fault has occurred. In FIG. 10, a state in which the auxiliary disconnector 10-1, the breaker 30-B-1, and the disconnector 40-B-1 are open in a state in which the fault current no longer flows through the DC power transmission line LN-1 is shown.

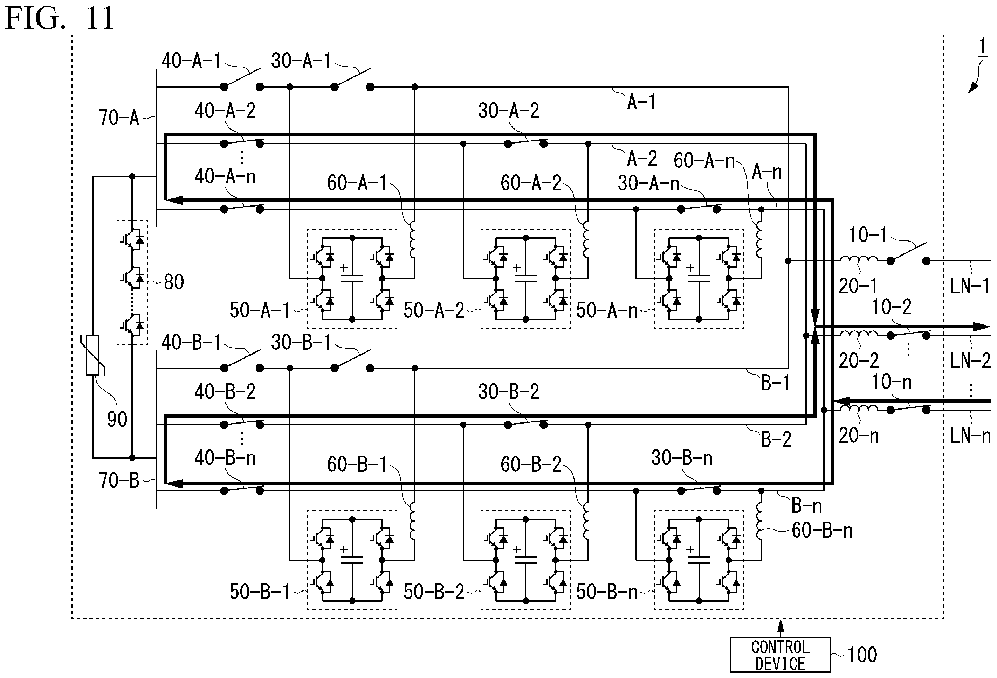

(Procedure 1-6): Subsequently, the control device 100 causes the breaker 30-B-1 and the disconnector 40-B-1 belonging to the auxiliary line B of the DC power transmission line LN-2 where no fault has occurred and the breaker 30-B-n and the disconnector 40-B-n belonging to the auxiliary line B of the DC power transmission line LN-n where no fault has occurred to be in the closed state. That is, the control device 100 returns the mechanical contact type switch of the faultless circuit that has been open in the auxiliary line B to the closed state. Thereby, the control device 100 completes an operation of disconnecting an electrical connection of the DC power transmission line LN-1 where a fault has occurred. Thereby, in the DC circuit breaker 1, DC power transmission by a faultless circuit is maintained. In FIG. 11, a state in which a current flows from the DC power transmission line LN-n, which is a faultless circuit, to the DC power transmission line LN-2, which is a faultless circuit, via the DC bus 70-A and the DC bus 70-B is shown.

According to such a procedure, in the DC circuit breaker 1, the control device 100 causes the arc due to the fault current to be extinguished by controlling the breaker 30-A, the disconnector 40-A, and the commutation circuit 50-A belonging to the auxiliary line A of the fault circuit and the breaker 30-B, the disconnector 40-B, and the commutation circuit 50-B belonging to the auxiliary line B of the faultless circuit. In the DC circuit breaker 1, the control device 100 controls the breaker 30-B and the disconnector 40-B belonging to the auxiliary line B of the fault circuit after the fault current becomes zero. Thereby, the DC circuit breaker 1 can interrupt the fault circuit and maintain power transmission in the faultless circuit.

In the above-described first operation, a case where the control device 100 interrupts the DC power transmission line LN-1 (fault circuit) by interrupting the fault current so that the fault current flows from the first end i side of the semiconductor breaker 80 to the second end j side by controlling each component belonging to the auxiliary line A of the fault circuit and each component belonging to the auxiliary line B of the faultless circuit has been described. This is because the configuration of the semiconductor breaker 80 is a configuration in which the current flowing from the first end i side to the second end j side is interrupted. In other words, in the first operation, the control device 100 controls the components belonging to the auxiliary line A and the auxiliary line B so that the upstream side of the fault current flowing through the fault circuit is set as the first end i side of the semiconductor breaker 80 and the downstream side of the fault current is set as the second end j side of the semiconductor breaker 80. However, as described above, it is possible to adopt a configuration in which a bidirectional fault current is interrupted by replacing the semiconductor breaker 80 with the semiconductor breaker 80b shown in FIG. 2B or replacing the semiconductor switch unit with the semiconductor switch unit 81a shown in FIG. 2C as an example. In this case, in the DC circuit breaker 1, components to be controlled when the fault circuit is interrupted may be reversed between the auxiliary line A and the auxiliary line B. That is, the control device 100 may interrupt the fault circuit by controlling each component belonging to the auxiliary line B of the fault circuit and each component belonging to the auxiliary line A of the faultless circuit. However, in this case, the concept of the upstream side and the downstream side of the fault current is also similar to that in the first operation described above. In other words, there is no change in controlling each component belonging to the fault circuit on the upstream side of the fault current and controlling each component belonging to the faultless circuit on the downstream side of the fault current. In this case, it is only necessary for the procedure in the control device 100 to be similar and equivalent to the first operation described above. Accordingly, repeated detailed description of the procedure in the control device 100 will be omitted.

### [Second operation of interrupting DC bus 70 in DC circuit breaker 1]

In the above-described first operation, when a fault occurs in the DC power transmission line LN-1, an operation for cutting off the fault circuit has been described. However, the fault may be likely to occur, for example, inside of the DC circuit breaker 1. For example, in the configuration of the DC circuit breaker 1 shown in FIG. 1, a fault may occur in the DC bus 70-B. In this case, due to a fault that has occurred in the DC bus 70-B, a fault current flows through the DC power transmission lines LN-1 to LN-n.

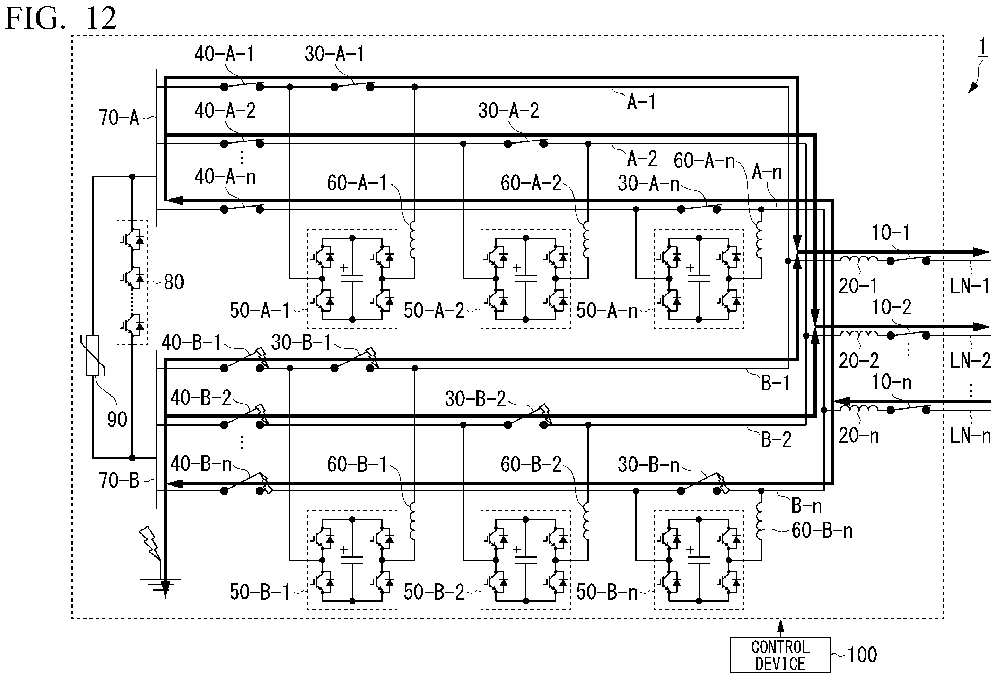

Here, referring to FIGS. 3 and 12 to 17, for example, a second operation in which the control device 100 causes the DC bus 70-B to be interrupted will be described as an example in which a fault occurs in the DC bus 70-B when the DC power transmission lines LN-1 to LN-n are connected to each other via the DC bus 70-A and the DC bus 70-B and a current is flowing from the DC power transmission line LN-n to the DC power transmission line LN-1 and the DC power transmission line LN-2. In FIGS. 12 to 17, the current flow in the DC circuit breaker 1 when each component is controlled by the control device 100 is shown.

In the steady power transmission state (initial state) in which the DC power transmission line LN-1 to LN-n is connected to each other via the DC bus 70-A and the DC bus 70-B and power transmission is performed, as in the first operation, all the auxiliary disconnectors 10, the breakers 30, and the disconnectors 40 are closed and semiconductor switch units provided in all the commutation circuits 50 and the semiconductor switch units provided in the semiconductor breaker 80 are all in the OFF state and the power transmission of the DC current is performed (see FIG. 3). Here, when a fault (for example, a ground fault) has occurred in the DC bus 70-B, the control device 100 interrupts the DC bus 70-B where the fault has occurred by controlling an open state, a closed state, an ON state, or an OFF state of each component in the following procedures. In the following description, the auxiliary line B of the DC power transmission line LN connected to the DC bus 70-B where the fault has occurred is also referred to as a "fault circuit" and an auxiliary line A of a DC power transmission line LN connected to a DC bus 70-A other than the DC bus 70-B where the fault has occurred, i.e., a DC bus 70-A where no fault has occurred, is also referred to as a "faultless circuit."

(Procedure 2-1): First, the control device 100 causes the breakers 30-B and the disconnectors 40-B belonging to the auxiliary lines B (fault circuits) of all DC power transmission lines LN connected to the DC bus 70-B where the fault has occurred to be in the open state. That is, the control device 100 causes all mechanical contact type switches belonging to the auxiliary line B to be open. Also, in this case, in the DC circuit breaker 1, as shown in FIG. 12, a current (fault current) flows through the auxiliary line B via the DC bus 70-B. This is because just opening each mechanical contact type switch does not cause the DC power transmission line LN to be electrically disconnected (disconnected state) due to the arc generated between contacts in each mechanical contact type switch as in the case where the fault has occurred in the DC power transmission line LN-1 in the above-described first operation.

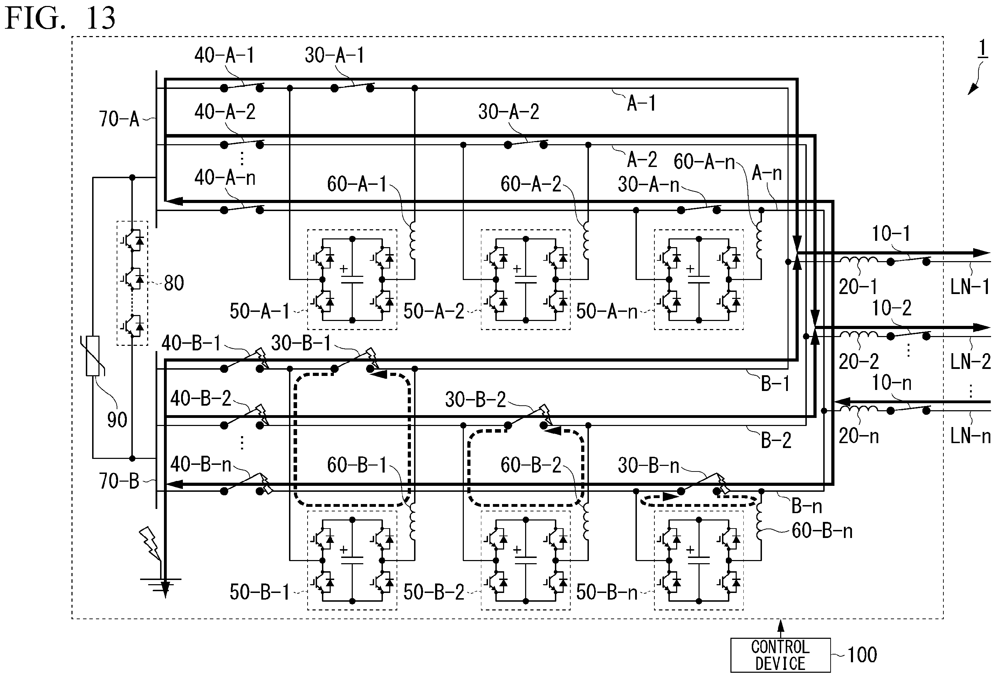

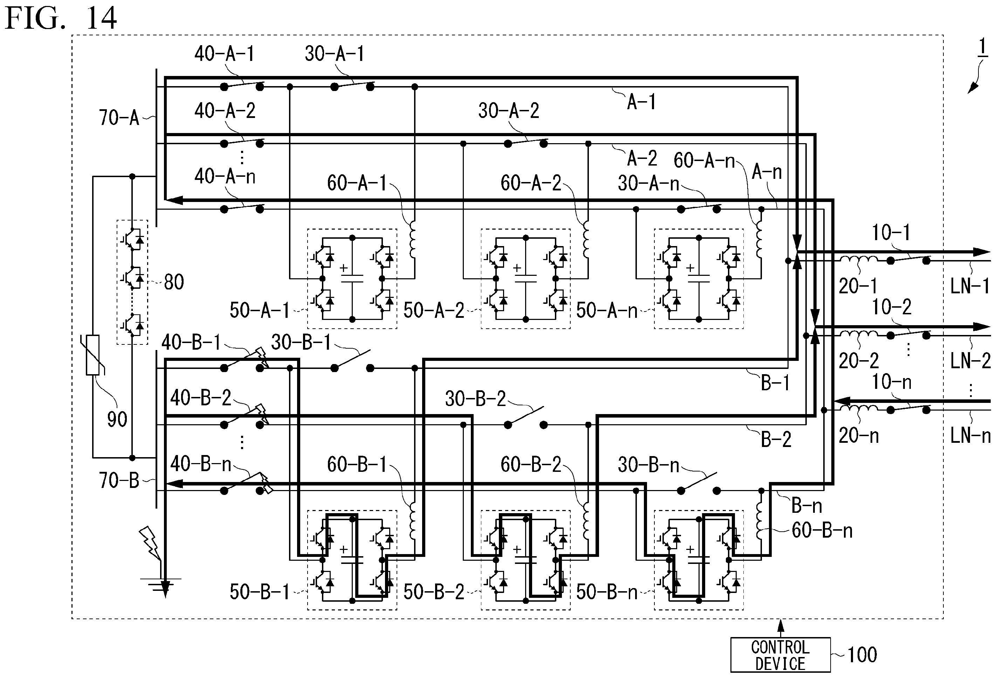

(Procedure 2-2): Subsequently, the control device 100 causes the commutation circuit 50 corresponding to each breaker 30 belonging to the auxiliary line B set in the open state to be operated. Thereby, the capacitor provided in the commutation circuit 50 in which the semiconductor switch unit is turned on is discharged to supply electric charge and switches (commutates) the direction of the current flowing between the first end g and the second end h. In FIG. 13, a state in which commutation circuits 50 corresponding to the breaker 30-B-1, the breaker 30-B-2, and the breaker 30-B-n in the open state are operated is shown. Thereby, the fault current is commutated to the commutation circuit 50 and the fault current flowing to each breaker 30 belonging to the auxiliary line B becomes substantially zero. Here, in the procedure 2-2, as in the first operation, after the mechanical contact type switch is allowed to be open in the procedure 2-1, when the fault current between the two terminals of the breaker 30 becomes substantially zero due to the power flow state of the fault current, the commutation circuit 50 corresponding to the breaker 30 may also not be operated. In FIG. 14, a state in which the arc generated between the contacts of the corresponding breakers 30 belonging to the auxiliary line B (the breaker 30-A-1, the breaker 30-B-2, and the breaker 30-B-n) is extinguished due to the fault current flowing through the operated commutation circuit 50 is shown.

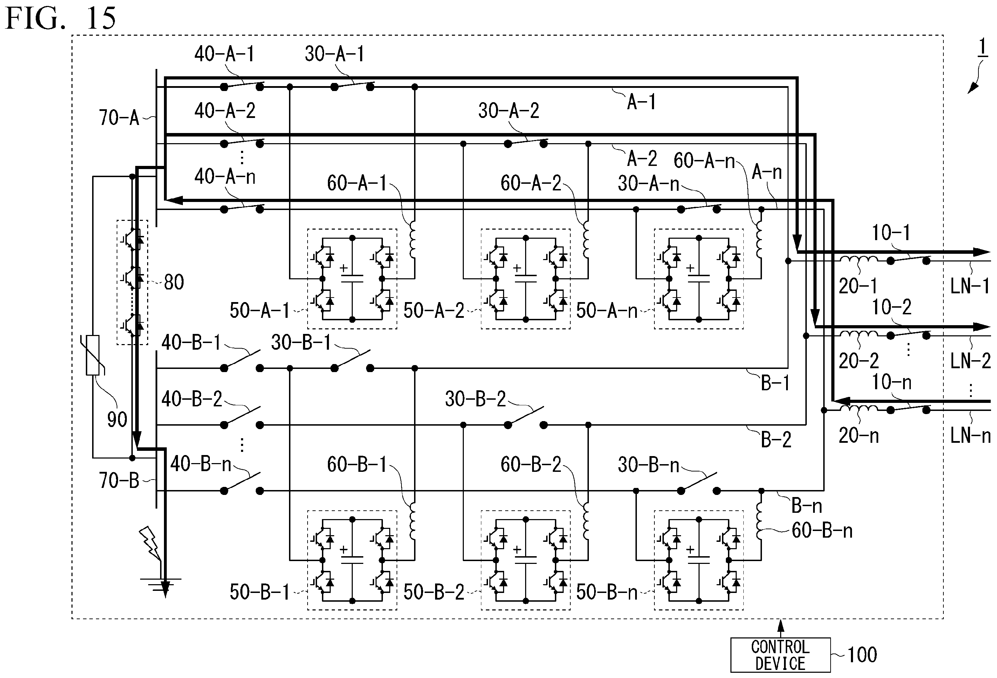

(Procedure 2-3): Subsequently, the control device 100 causes the semiconductor switch unit provided in the semiconductor breaker 80 to be in the ON state and causes the operation of the commutation circuit 50 corresponding to each breaker 30 belonging to the auxiliary line B that has been operated to be stopped. That is, the control device 100 causes the semiconductor switch units provided in the commutation circuits 50 corresponding to all the breakers 30 belonging to the auxiliary line B to be in the OFF state. Thereby, in the DC circuit breaker 1, as shown in FIG. 15, the fault current of all DC power transmission lines LN connected to the DC bus 70-B is commutated to the semiconductor breaker 80, and the fault current flowing through the disconnector 40-B-1, the disconnector 40-B-2, and the disconnector 40-B-n becomes substantially zero. In FIG. 15, a state in which the arc generated between the contacts of the disconnector 40-B-1, the disconnector 40-B-2, and the disconnector 40-B-n is extinguished is shown. Also, in the second operation, as in the first operation, a timing for opening the disconnector 40-B-1, the disconnector 40-B-2, and the disconnector 40-B-n may be a timing of the procedure 2-3.

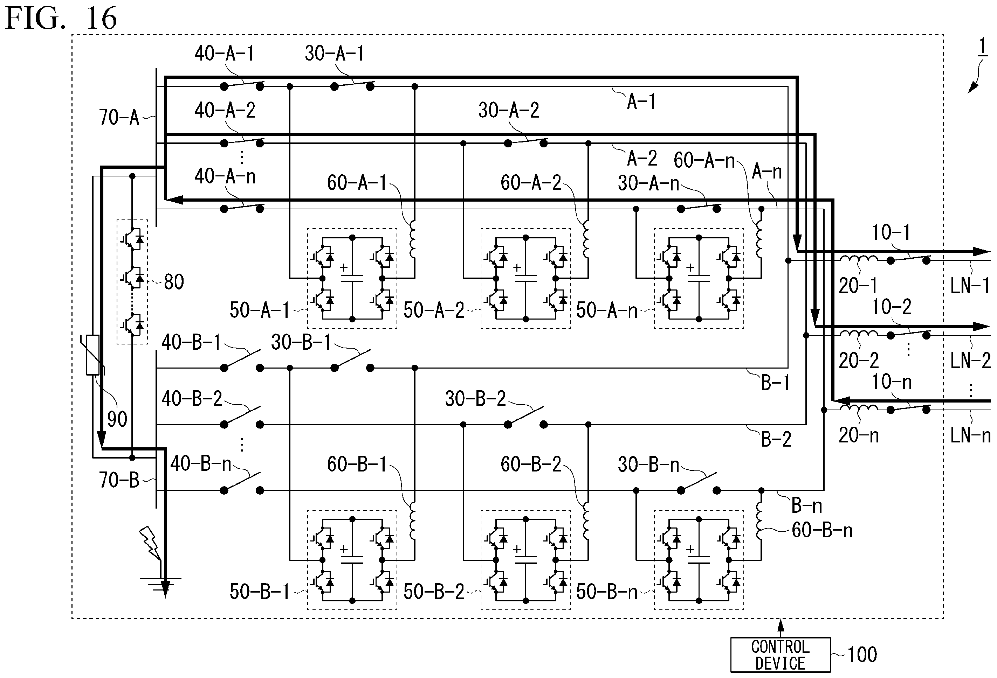

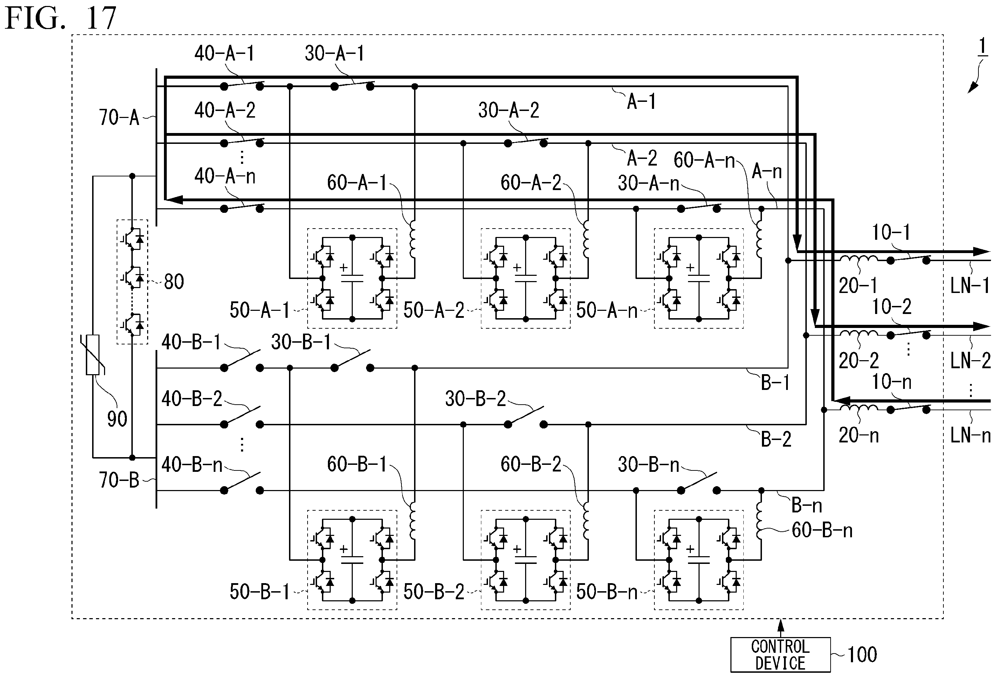

(Procedure 2-4): Subsequently, the control device 100 causes the semiconductor switch unit provided in the semiconductor breaker 80 to be in the OFF state. Thereby, in the DC circuit breaker 1, the fault current of the DC bus 70-B is interrupted and becomes substantially zero. Subsequently, in the DC circuit breaker 1, the fault current continues to flow for a while due to the surge energy stored in the inductance component in the line, but this surge energy is consumed by the arrester 90. In FIG. 16, a state in which the fault current of the DC bus 70-B flows through the arrester 90 is shown. In FIG. 17, a state in which the fault current of the DC bus 70-B is consumed by the arrester 90 and no longer flows is shown.

According to such a procedure, in the DC circuit breaker 1, the control device 100 controls the breaker 30-B, the disconnector 40-B, and the commutation circuit 50-B belonging to all auxiliary lines B connected to the DC bus 70-B to interrupt the DC bus 70-B, which is the fault circuit, and maintain power transmission by the DC bus 70-A, which is the faultless circuit.

(Procedure 2-5): Subsequently, after the DC bus 70-B ceases to be the fault circuit (for example, after the repair for the fault that has occurred in the DC bus 70-B is completed), the control device 100 causes the breakers 30-B and the disconnectors 40-B belonging to all the auxiliary lines B connected to the DC bus 70-B to be in the closed state. That is, the control device 100 returns the mechanical contact type switch, which has been open, on the auxiliary line B connected to the DC bus 70-B where the fault has occurred to the closed state. Thereby, in the DC circuit breaker 1, DC power transmission is performed in the power transmission state (initial state) via the DC bus 70 of each of the DC bus 70-A and the DC bus 70-B (see FIG. 3).

According to such a procedure, in the DC circuit breaker 1, the control device 100 causes the arc due to the fault current to be extinguished by controlling the breaker 30-B, the disconnector 40-B, and the commutation circuit 50-B belonging to the auxiliary line B connected to the DC bus 70-B that has become the fault circuit. Thereby, the DC circuit breaker 1 can interrupt the DC bus 70-B and maintain power transmission via the DC bus 70-A. Moreover, in this case, the power flow state of each DC power transmission line LN in the steady power transmission state (initial state) may be in any direction. Subsequently, in the DC circuit breaker 1, the control device 100 restores the state of each component after the DC bus 70-B ceases to be a fault circuit.

A case where the DC bus 70-B becomes a fault circuit has been described in the above-described second operation. That is, a case where the fault current flows from the first end l side to the second end j side of the semiconductor breaker 80 has been described. This is because the configuration of the semiconductor breaker 80 is a configuration in which the current flowing from the first end i side to the second end j side is interrupted. However, even if the DC bus 70-A becomes a fault circuit, when a fault current flows from the first end i side to the second end j side of the semiconductor breaker 80, it is possible to similarly interrupt the DC bus 70-A and maintain the power transmission via the DC bus 70-B. Furthermore, as described above, it is possible to adopt a configuration in which a bidirectional fault current is interrupted by replacing the semiconductor breaker 80 with the semiconductor breaker 80b shown in FIG. 2B or replacing the semiconductor switch unit with the semiconductor switch unit 81a shown in FIG. 2C as an example. In this case, the DC circuit breaker 1 can interrupt the DC bus 70 where the fault has occurred regardless of the direction of the fault current flowing due to the fault and maintain power transmission via the DC bus 70 in which no fault has occurred. The procedure in the control device 100 in this case may be equivalent to the second operation described above. Accordingly, repeated detailed description of the procedure in the control device 100 will be omitted.

According to such a configuration and procedure, in the DC circuit breaker 1, after the semiconductor breaker 80, which is costly to implement a high withstand voltage, is shared by all DC power transmission lines LN, when a fault has occurred in any one of the DC power transmission lines LN or the DC buses 70, the DC power transmission line LN or the DC bus 70 where the fault has occurred is interrupted and the DC power transmission by the DC power transmission line LN or the DC bus 70 where no fault has occurred is maintained.

Moreover, in the DC circuit breaker 1, the semiconductor breaker 80 is configured to interrupt the fault current in both directions, such that it is possible to interrupt the fault current flowing through the fault circuit regardless of the current state of the fault circuit and maintain the power transmission in a state in which steady power loss does not occur at the time of DC power transmission in the faultless circuit.

### [Modified example of DC circuit breaker 1]

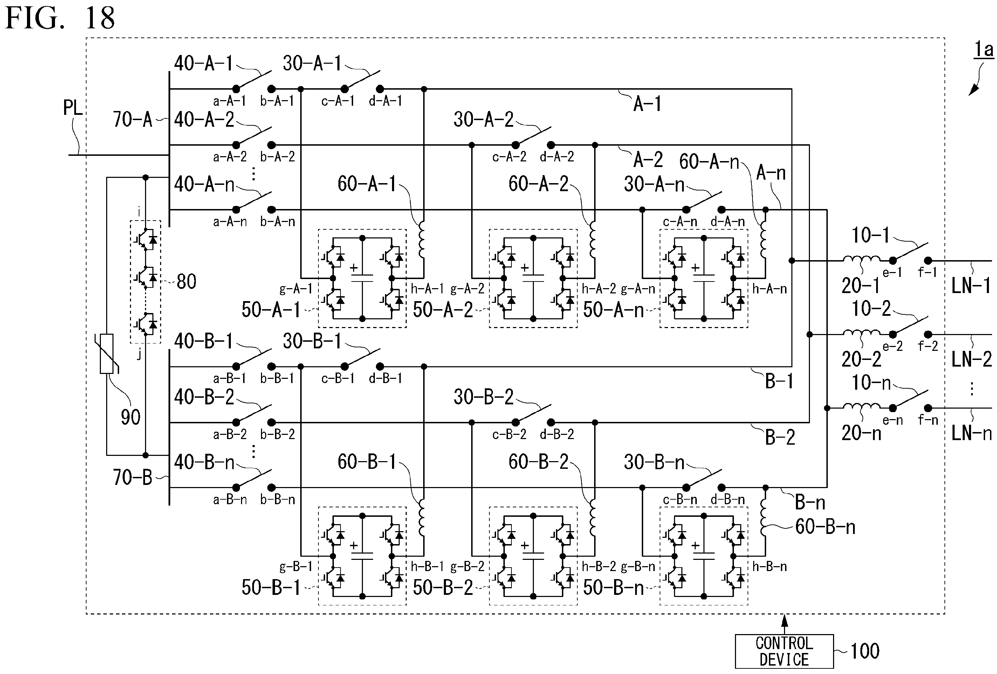

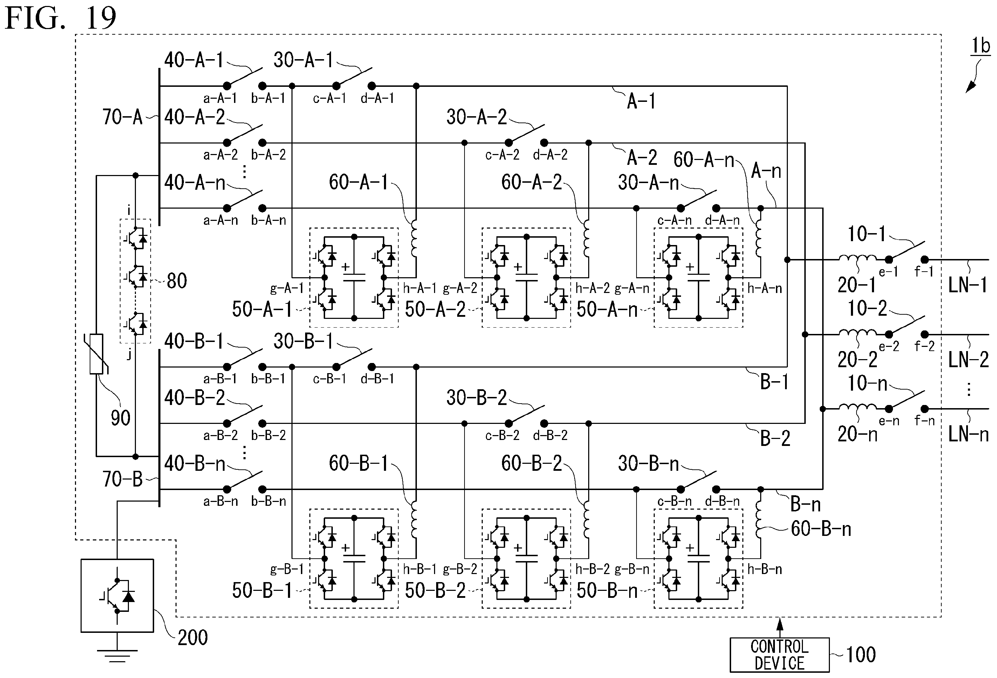

In the DC circuit breaker 1, a transmission line other than the DC power transmission line LN may be connected to the DC bus 70. Furthermore, other devices and equipment arranged in the immediate vicinity of the DC circuit breaker 1 may be connected to this transmission line. Here, an example of such a case will be described. FIG. 18 is a diagram showing an example of a configuration of a first modified example of the DC circuit breaker 1 of the first embodiment. FIG. 19 is a diagram showing an example of a configuration of a second modified example of the DC circuit breaker 1 of the first embodiment. In FIGS. 18 and 19, components having the same functions as those of the DC circuit breaker 1 are denoted by the same reference signs.

In the DC circuit breaker 1a shown in FIG. 18, a transmission line PL is connected to the DC bus 70-A of the DC circuit breaker 1. Other components or their connections provided in the DC circuit breaker 1a are similar to those provided in the DC circuit breaker 1. The transmission line PL connects the DC bus 70 to other devices and equipment arranged in the immediate vicinity of the DC circuit breaker 1a. The transmission line PL may be connected to the DC bus 70-B instead of the DC bus 70-A or different transmission lines PL may be connected to both the DC bus 70-A and the DC bus 70-B. The number of transmission lines PL connected to one or both of the DC bus 70-A and the DC bus 70-B is not limited to one, but may be two or more.

In the DC circuit breaker 1b shown in FIG. 19, the power converter 200 is connected to a side opposite a side where the DC bus 70-B is connected on one transmission line PL connected to the DC bus 70-B. Other components or their connections provided in the DC circuit breaker 1b are similar to those provided in the DC circuit breaker 1. The power converter 200 converts a DC current transmitted between the DC power transmission lines LN via the DC bus 70-B. The power converter 200 may be connected to a transmission line PL connected to the DC bus 70-A or the different power converters 200 may be connected to the transmission lines PL when different transmission lines PL are connected to both the DC bus 70-A and the DC bus 70-B. The number of power converters 200 connected to each transmission line PL is not limited to one, but may be two or more.

In the DC circuit breaker 1a or the DC circuit breaker 1b, a control procedure in the control device 100 when a fault has occurred in any DC power transmission line LN is similar to the above-described first operation. In the DC circuit breaker 1a or the DC circuit breaker 1b, for example, the control procedure in the control device 100 when a fault has occurred in the transmission line PL or the power converter 200 is similar to the above-described second operation. For example, the control procedure in the control device 100 when a fault has occurred in the power converter 200 in the DC circuit breaker 1b is similar to an example of a case where a fault has occurred in the DC bus 70-B described with reference to FIGS. 3 and FIGS. 12 to 17. Accordingly, repeated detailed description of the procedure in the control device 100 will be omitted.

As described above, according to the DC circuit breaker 1 of the first embodiment, it is applied to a multi-terminal DC power transmission system and it is possible to interrupt the DC power transmission line LN or the DC bus 70 where a fault has occurred and maintain DC power transmission by the DC power transmission line LN or the DC bus 70 where no fault has occurred after the semiconductor breaker 80 (including the semiconductor breaker 80a or the semiconductor breaker 80b) is shared.

### (Second embodiment)

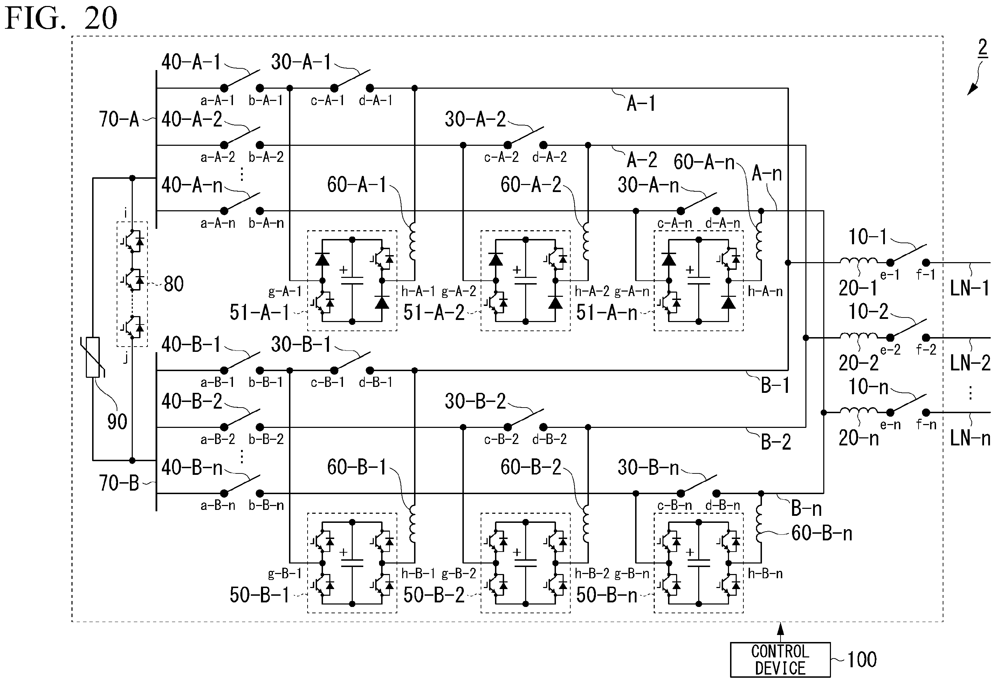

Hereinafter, a second embodiment will be described. FIG. 20 is a diagram showing an example of a configuration of a DC circuit breaker according to the second embodiment. In FIG. 20, components having the same functions as those of the DC circuit breaker 1 of the first embodiment are denoted by the same reference signs. In FIG. 20, an example of a DC circuit breaker 2 configured at a node portion of a plurality of DC power transmission lines LN (DC power transmission lines LN-1 to LN-n) is shown.

The DC circuit breaker 2 includes, for example, a plurality of auxiliary disconnectors 10 (auxiliary disconnectors 10-1 to 10-n), a plurality of DC reactors 20 (DC reactors 20-1 to 20-n), a plurality of breakers 30 (breakers 30-A-1 to 30-A-n and breakers 30-B-1 to 30-B-n), a plurality of disconnectors 40 (disconnectors 40-A-1 to 40-A-n and disconnectors 40-B-1 to 40-B-n), a plurality of commutation circuits 51 (commutation circuits 51-A-1 to 51-A-n), a plurality of commutation circuits 50 (commutation circuits 50-B-1 to 50-B-n), a plurality of inductors 60 (inductors 60-A-1 to 60-A-n and inductors 60-B-1 to 60-B-n), two DC buses 70 (DC buses 70-A and 70-B), a semiconductor breaker 80, an arrester 90, and a control device 100. In the DC circuit breaker 2, the commutation circuit 51 is configured instead of each commutation circuit 50 on the auxiliary line A side provided in the DC circuit breaker 1 of the first embodiment.

Like the commutation circuit 50, the commutation circuit 51 switches (commutates) a direction of a current flowing between a first end g and a second end h. A leg unit provided in the commutation circuit 51 is different from the leg unit provided in the commutation circuit 50. More specifically, the leg unit provided in the commutation circuit 51 is replaced with a series circuit in which one semiconductor switch unit and one diode are connected together in series. In the commutation circuit 51, two leg units and one capacitor are also connected to each other as a bridge circuit. Like the commutation circuit 50, the commutation circuit 51 also causes a current flowing between the first end g and the second end h to become substantially zero by changing an electric current value of the current flowing between the first end g and the second end h in accordance with a control process of the control device 100 for either an ON or OFF state of the semiconductor switch unit. Thereby, in the commutation circuit 51, as in the commutation circuit 50, the two terminals of the corresponding breaker 30 are electrically disconnected. The diode is an example of a "current rectifier element" in the claims.

### [Operation in DC circuit breaker 2]

The DC circuit breaker 2 has a configuration in which a fault circuit is interrupted when a fault has occurred in the DC power transmission line LN or the DC bus 70-B by replacing the commutation circuit 50 corresponding to the auxiliary line A with the commutation circuit 51. However, it is only necessary for the procedure of the control device 100 when the operation of interrupting the DC power transmission line LN or the DC bus 70 is performed in the DC circuit breaker 2 to be similar and equivalent to the procedure of the control device 100 in the DC circuit breaker 1. Accordingly, repeated detailed description of the procedure of the control device 100 in the DC circuit breaker 2 will be omitted.

According to such a configuration and procedure, in the DC circuit breaker 2, as in the DC circuit breaker 1, after the semiconductor breaker 80, which is costly to implement a high withstand voltage, is shared by all DC power transmission lines LN, when a fault has occurred in any one of the DC power transmission lines LN or the DC buses 70, the DC power transmission line LN or DC bus 70 where the fault has occurred is interrupted and the DC power transmission by the DC power transmission line LN and the DC bus 70 where no fault has occurred is maintained as well. Also, in the DC circuit breaker 2, as in the DC circuit breaker 1, the semiconductor breaker 80 is also configured to interrupt the fault current in both directions, such that it is possible to interrupt the fault current flowing through the fault circuit regardless of the current state of the fault circuit and maintain the power transmission in a state in which steady power loss does not occur at the time of DC power transmission in the faultless circuit.

Moreover, in the DC circuit breaker 2, the commutation circuit 50 corresponding to the auxiliary line A is replaced with the commutation circuit 51. Thereby, although the DC circuit breaker 2 has a configuration corresponding to a fault that has occurred in the DC power transmission line LN or the DC bus 70-B, it is possible to implement cost reduction when the DC circuit breaker 2 is configured because the configuration of the commutation circuit 51 is simpler than that of the commutation circuit 50.

In the DC circuit breaker 2, as in the modified example of the DC circuit breaker 1, a transmission line PL is also connected to the DC bus 70 and another device or piece of equipment such as the power converter 200 may be further connected thereto.

As described above, according to the DC circuit breaker 2 of the second embodiment, it is applied to a multi-terminal DC power transmission system and it is possible to interrupt the DC power transmission line LN or the DC bus 70 where a fault has occurred and maintain DC power transmission by the DC power transmission line LN or the DC bus 70 where no fault has occurred after the semiconductor breaker 80 (including the semiconductor breaker 80a or the semiconductor breaker 80b) is shared.

### (Third embodiment)

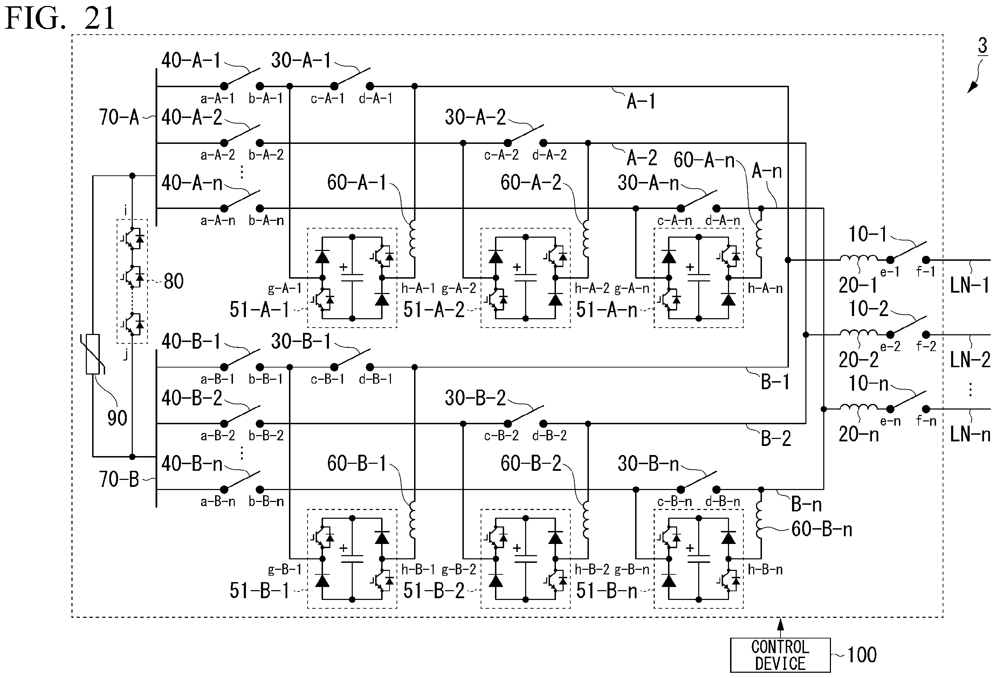

Hereinafter, a third embodiment will be described. FIG. 21 is a diagram showing an example of a configuration of a DC circuit breaker according to the third embodiment. In FIG. 21, components having the same functions as those of the DC circuit breaker 1 of the first embodiment or the DC circuit breaker 2 of the second embodiment are denoted by the same reference signs. In FIG. 20, an example of a DC circuit breaker 3 configured at a node portion of a plurality of DC power transmission lines LN (DC power transmission lines LN-1 to LN-n) is shown.

The DC circuit breaker 3 includes, for example, a plurality of auxiliary disconnectors 10 (auxiliary disconnectors 10-1 to 10-n), a plurality of DC reactors 20 (DC reactors 20-1 to 20-n), a plurality of breakers 30 (breakers 30-A-1 to 30-A-n and breakers 30-B-1 to 30-B-n), a plurality of disconnectors 40 (disconnectors 40-A-1 to 40-A-n and disconnectors 40-B-1 to 40-B-n), a plurality of commutation circuits 51 (commutation circuits 51-A-1 to 51-A-n and commutation circuits 51-B-1 to 51-B-n), a plurality of inductors 60 (inductors 60-A-1 to 60-A-n and inductors 60-B-1 to 60-B-n), two DC buses 70 (DC buses 70-A and 70-B), a semiconductor breaker 80, an arrester 90, and a control device 100. The DC circuit breaker 3 has a configuration in which the commutation circuit 50 of each of the auxiliary line A side and the auxiliary line B side provided in the DC circuit breaker 1 of the first embodiment is replaced with the commutation circuit 51.

In the DC circuit breaker 3, each of the commutation circuits 50 corresponding to the auxiliary lines A and B are replaced with the commutation circuit 51 and therefore a configuration in which the direction in which the fault current flowing through the fault circuit can be interrupted is one direction (i.e., unidirectional) when a fault has occurred in the DC power transmission line LN or the DC bus 70 is adopted. However, although the DC circuit breaker 3 has a configuration in which a unidirectional fault current is interrupted, the commutation circuit 51 has a configuration that is simpler than the commutation circuit 50, such that the cost when the DC circuit breaker 3 is configured can be reduced.

### [Third operation of interrupting DC power transmission line LN in DC circuit breaker 3]

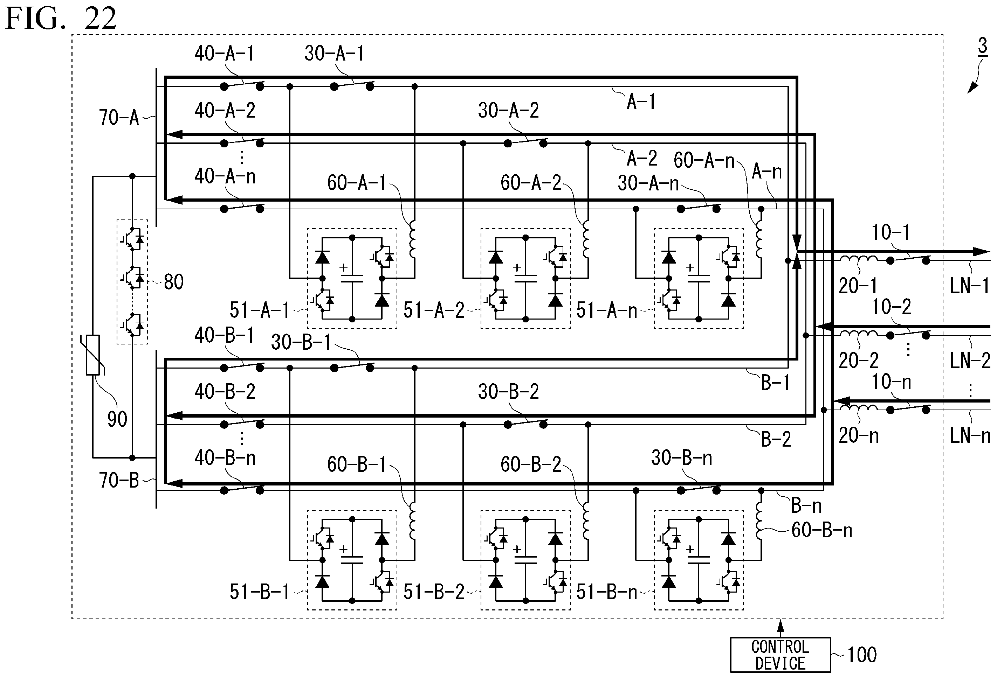

Here, referring to FIGS. 22 to 30, for example, a third operation in which the control device 100 causes the DC power transmission line LN-1 to be interrupted will be described as an example in which a fault occurs in the DC power transmission line LN-1 when the DC power transmission lines LN-1 to LN-n are connected to each other via the DC bus 70-A and the DC bus 70-B and a current is flowing from the DC power transmission line LN-2 and the DC power transmission line LN-n to the DC power transmission line LN-1. In FIGS. 22 to 30, the current flow within the DC circuit breaker 3 in a state in which each component is controlled by the control device 100 is shown.

In a steady power transmission state (initial state) in which the DC power transmission lines LN-1 to LN-n are connected to each other via the DC bus 70-A and the DC bus 70-B and power transmission is performed, all the auxiliary disconnectors 10, the breakers 30, and the disconnectors 40 are closed and the semiconductor switch units provided in all the commutation circuits 50 and the semiconductor switch units provided in the semiconductor breaker 80 are all in the OFF state. In this case, in the DC circuit breaker 3, as shown in FIG. 22, a current flows from the DC power transmission line LN-2 and the DC power transmission line LN-n to the DC power transmission line LN-1 via the DC bus 70-A and the DC bus 70-B. Here, when a fault has occurred in the DC power transmission line LN-1, the control device 100 interrupts the DC power transmission line LN-1 where the fault has occurred by controlling an open state, a closed state, an ON state, or an OFF state of each component in the following procedures. In the following description, a DC power transmission line LN where the fault has occurred is also referred to as a "fault circuit" and a DC power transmission line LN other than the DC power transmission line LN where no fault has occurred i.e., a DC power transmission line LN where no fault has occurred, is also referred to as a "faultless circuit."

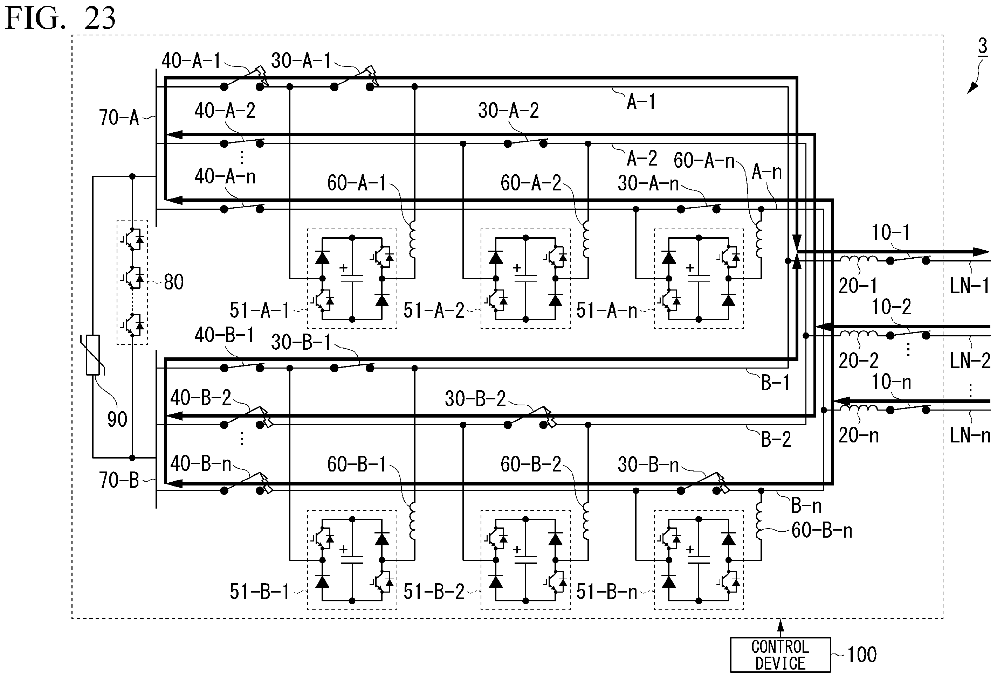

(Procedure 3-1): First, the control device 100 causes the breaker 30-A-1 and the disconnector 40-A-1 belonging to the auxiliary line A of the DC power transmission line LN-1 (fault circuit) where the fault has occurred to be in an open state. Further, the control device 100 causes a breaker 30-B-2 and a disconnector 40-B-2 belonging to the auxiliary line B of the DC power transmission line LN-2 (faultless circuit) where no fault has occurred and a breaker 30-B-n and a disconnector 40-B-n belonging to the auxiliary line B of the DC power transmission line LN-n (faultless circuit) where no fault has occurred to be in an open state. That is, the control device 100 causes a mechanical contact type switch belonging to the fault circuit in the auxiliary line A to be open and causes a mechanical contact type switch belonging to a faultless circuit in the auxiliary line B to be closed. In this case, in the DC circuit breaker 3, as shown in FIG. 23, a current (fault current) also flows from the DC power transmission line LN-2 and the DC power transmission line LN-n to the DC power transmission line LN-1 via the DC bus 70-A and the DC bus 70-B. This is because just opening each mechanical contact type switch does not cause the DC power transmission line LN to be electrically disconnected (a disconnected state) due to the arc generated between contacts in each mechanical contact type switch.

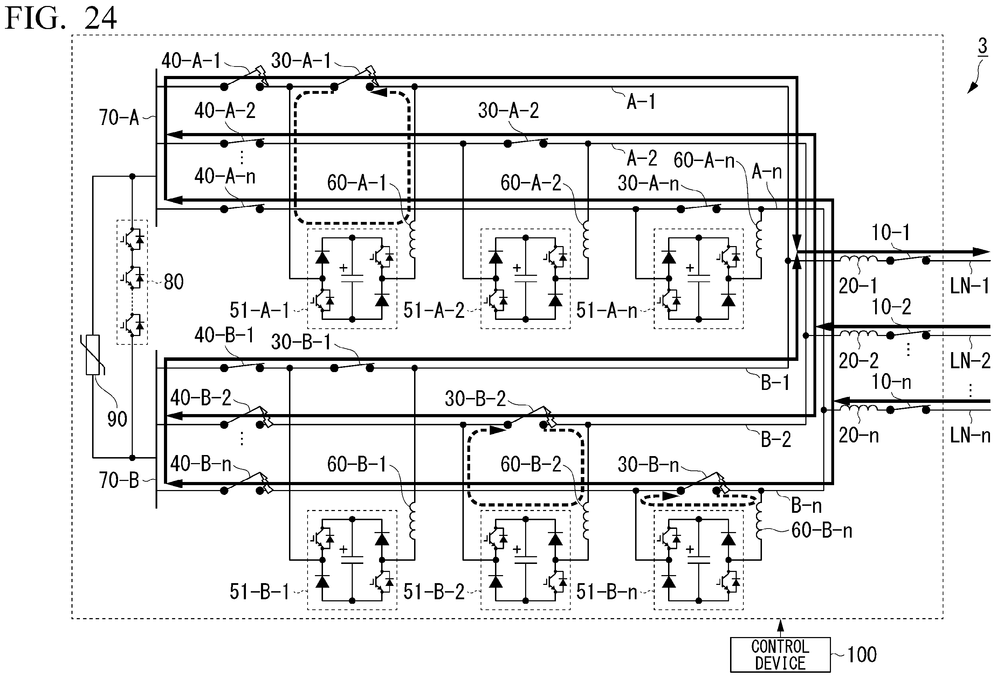

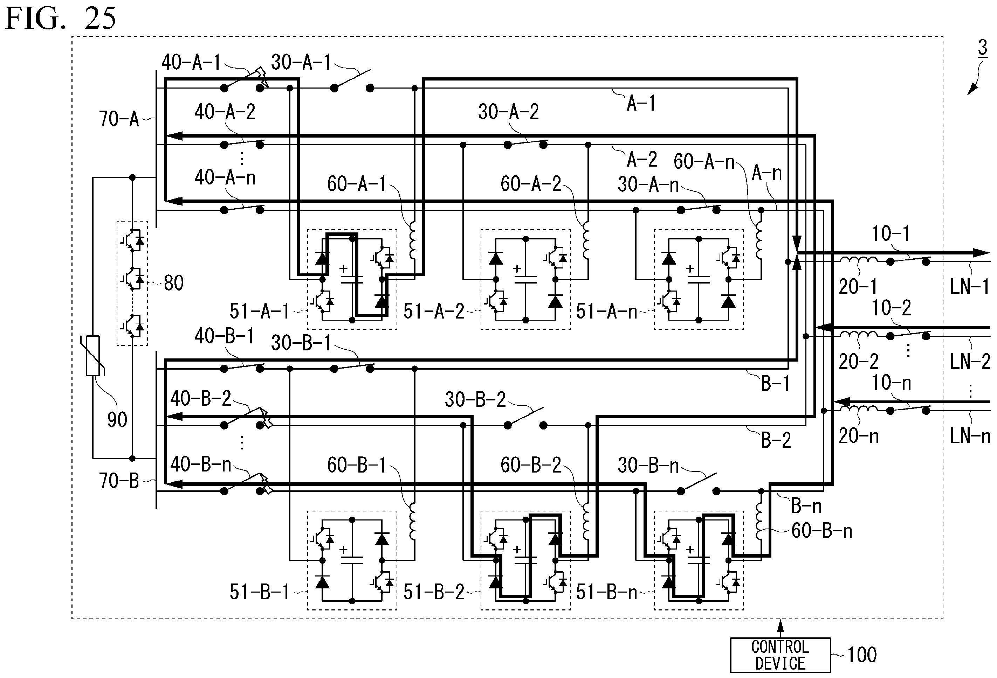

(Procedure 3-2): Subsequently, the control device 100 causes the commutation circuit 50 corresponding to the breaker 30 set in an open state to be operated. That is, the control device 100 causes the semiconductor switch unit provided in the commutation circuit 50 corresponding to the breaker 30 set in the open state to be in the ON state. Thereby, the capacitor provided in the commutation circuit 50 in which the semiconductor switch unit is turned on is discharged to supply electric charge and generates a current in a direction opposite a direction of the current flowing through the mechanical contact type switch. In FIG. 24, a state in which the commutation circuits 50 corresponding to the breaker 30-A-1, the breaker 30-B-2, and the breaker 30-B-n set in the open state are operated is shown. Thereby, the fault current flowing through the breaker 30 in the open state becomes substantially zero and the current is transferred (commutated) to the commutation circuit 50. Here, after the mechanical contact type switch is allowed to be open in the procedure 3-1, the fault current between the two terminals of the breaker 30 may be substantially zero according to a direction in which the fault current flows (a power flow state). In this case, the control device 100 may not cause the commutation circuit 50 corresponding to the breaker 30 to be operated in the procedure 3-2. In FIG. 25, a state in which the arc generated between the contacts of the corresponding breakers 30 (the breaker 30-A-1, the breaker 30-B-2, and the breaker 30-B-n) is extinguished due to the flow of a fault current via the commutation circuit 50 that has been operated is shown.

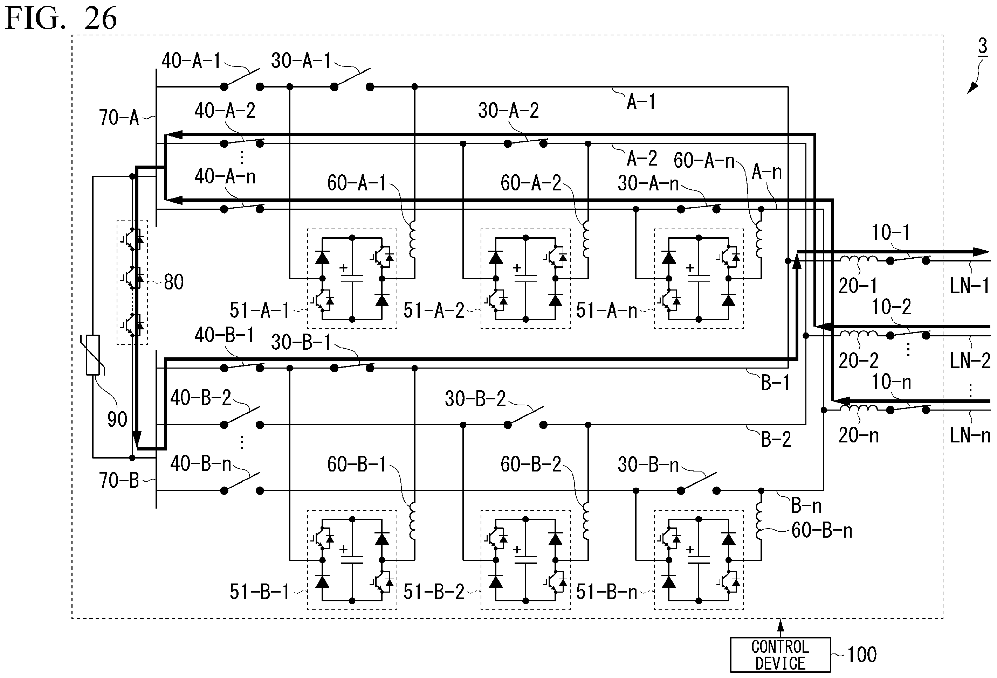

(Procedure 3-3): Subsequently, the control device 100 causes the semiconductor switch unit provided in the semiconductor breaker 80 to be in the ON state and causes the operation of the commutation circuit 50, which has been operated, to be stopped. That is, the control device 100 causes the semiconductor switch unit provided by the commutation circuit 50 corresponding to the breaker 30 set in the open state to be in the OFF state. Thereby, in the DC circuit breaker 3, as shown in FIG. 26, the fault current in the DC power transmission line LN-1 is commutated to the semiconductor breaker 80 and the fault current flowing through the disconnector 40-A-1, the disconnector 40-B-2, and the disconnector 40-B-n becomes substantially zero. In FIG. 26, a state in which the arc generated between the contacts of the disconnector 40-A-1, the disconnector 40-B-2, and the disconnector 40-B-n is extinguished is shown. A timing for opening the disconnector 40-A-1, the disconnector 40-B-2, and the disconnector 40-B-n may be a timing of the procedure 3-3.

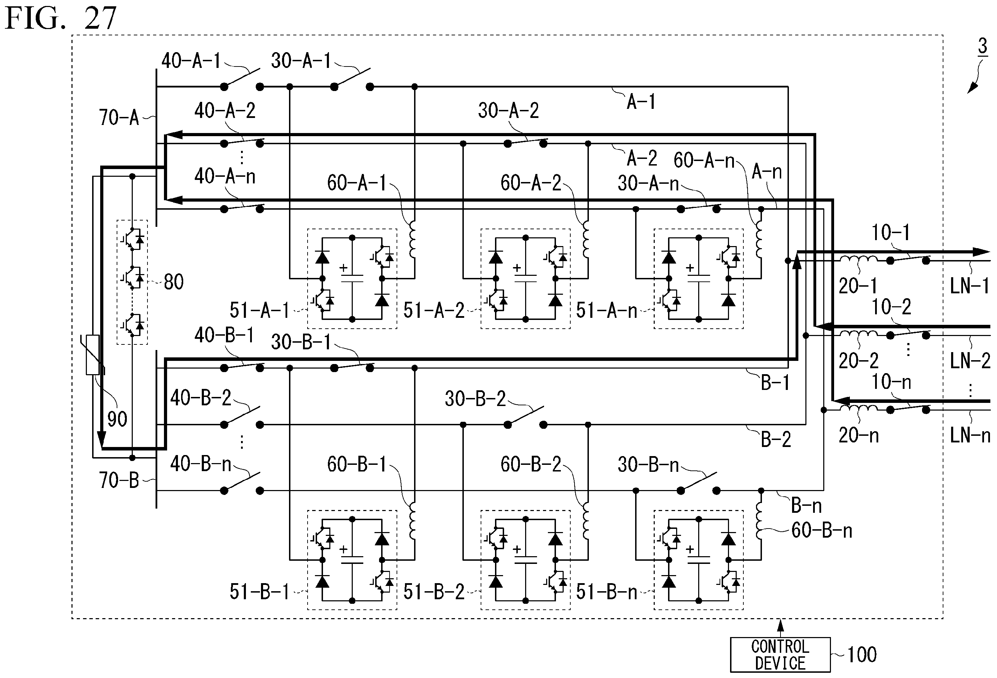

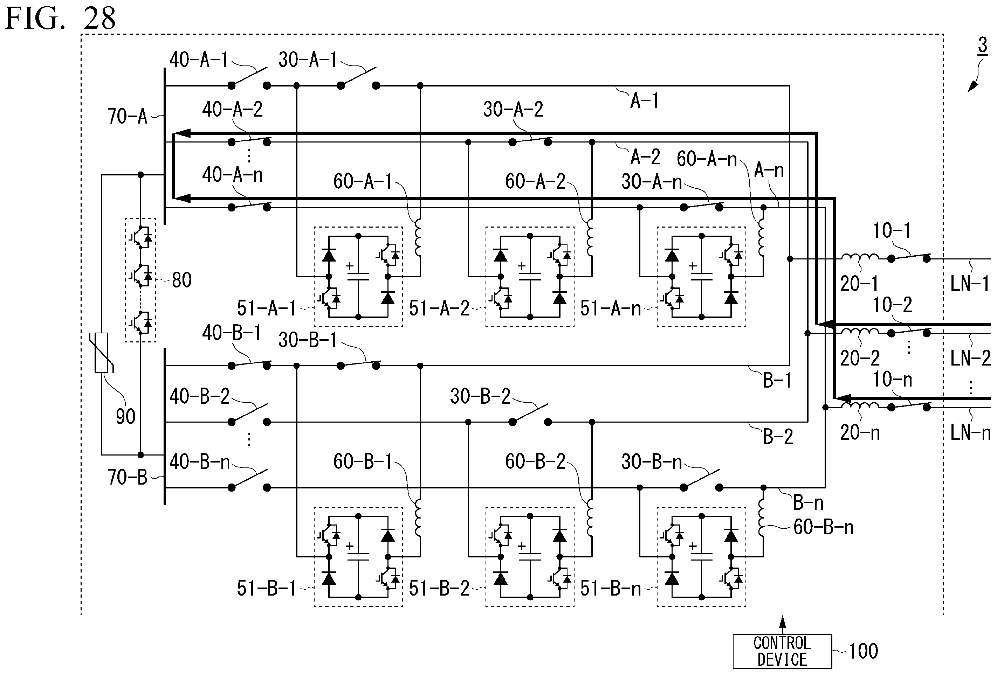

(Procedure 3-4): Subsequently, the control device 100 causes the semiconductor switch unit provided in the semiconductor breaker 80 to be in the OFF state. Thereby, in the DC circuit breaker 3, the fault current of the DC power transmission line LN-1 is interrupted and becomes substantially zero. Subsequently, in the DC circuit breaker 3, the fault current also continues to flow for a while due to surge energy stored in an inductance component in the line, but this surge energy is consumed by the arrester 90. In FIG. 27, a state in which the fault current of the DC power transmission line LN-1 flows through the arrester 90 is shown. In FIG. 28, a state in which the fault current of the DC power transmission line LN-1 is consumed by the arrester 90 and no longer flows is shown.

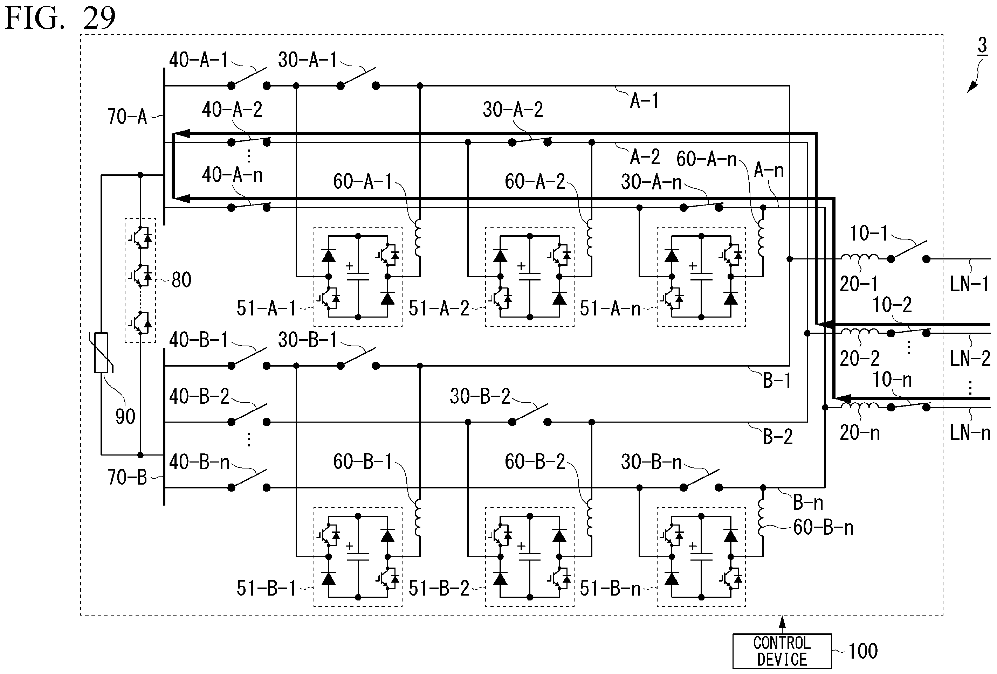

(Procedure 3-5): Subsequently, after the fault current flowing through the DC power transmission line LN-1 becomes zero (for example, after the elapse of the time for which it can be determined that the fault current flowing through the DC power transmission line LN-1 becomes zero), the control device 100 causes the auxiliary disconnector 10-1, the breaker 30-B-1, and the disconnector 40-B-1 belonging to the DC power transmission line LN-1 where the fault has occurred to be in the open state. That is, the control device 100 also causes a mechanical contact type switch belonging to the fault circuit to be open in the auxiliary line B of the DC power transmission line LN-1 where the fault has occurred. In FIG. 29, a state in which the auxiliary disconnector 10-1, the breaker 30-B-1, and the disconnector 40-B-1 are open in a state in which the fault current no longer flows through the DC power transmission line LN-1 is shown.

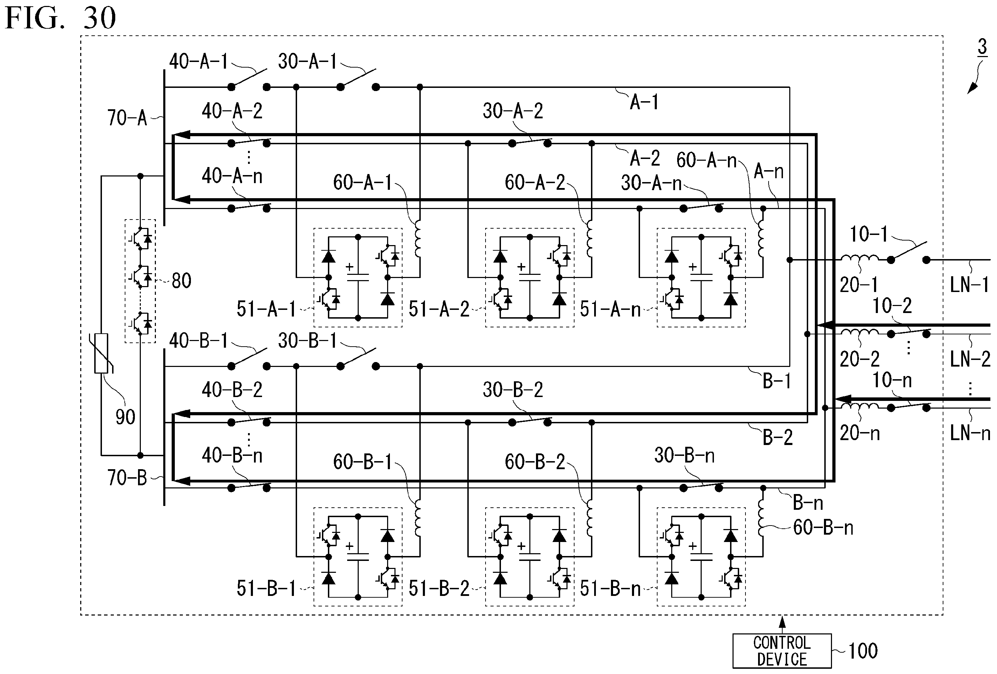

(Procedure 3-6): Subsequently, the control device 100 causes the breaker 30-B-1 and the disconnector 40-B-1 belonging to the auxiliary line B of the DC power transmission line LN-2 where no fault has occurred and the breaker 30-B-n and the disconnector 40-B-n belonging to the auxiliary line B of the DC power transmission line LN-n where no fault has occurred to be in the closed state. That is, the control device 100 returns the mechanical contact type switch of the faultless circuit that has been open in the auxiliary line B to the closed state. Thereby, the control device 100 completes an operation of disconnecting an electrical connection of the DC power transmission line LN-1 where a fault has occurred. Thereby, in the DC circuit breaker 3, DC power transmission by a faultless circuit is maintained. In FIG. 30, a state in which the DC power transmission line LN-2 and the DC power transmission line LN-n, which are faultless circuits, are connected via the DC bus 70-A and the DC bus 70-B and the current flows between the DC transmission lines LN is shown.

According to such a procedure, in the DC circuit breaker 3, as in the DC circuit breaker 1, the control device 100 also causes the arc due to the fault current to be extinguished by controlling the breaker 30-A, the disconnector 40-A, and the commutation circuit 50-A belonging to the auxiliary line A of the fault circuit and the breaker 30-B, the disconnector 40-B, and the commutation circuit 50-B belonging to the auxiliary line B of the faultless circuit. In the DC circuit breaker 3, the control device 100 also controls the breaker 30-B and the disconnector 40-B belonging to the auxiliary line B of the fault circuit after the fault current becomes zero. Thereby, like the DC circuit breaker 1, the DC circuit breaker 3 can also interrupt the fault circuit and maintain power transmission in the faultless circuit.

In the above-described third operation, as in the first operation in the DC circuit breaker 1, a case where the control device 100 interrupts the DC power transmission line LN-1 (fault circuit) by interrupting the fault current so that the fault current flows from the first end i side of the semiconductor breaker 80 to the second end j side by controlling each component belonging to the auxiliary line A of the fault circuit and each component belonging to the auxiliary line B of the faultless circuit has been described. However, in the DC circuit breaker 3, when the semiconductor breaker 80 has a configuration in which a bidirectional fault current is interrupted, components to be controlled when the control device 100 interrupts the fault circuit may also be reversed between the auxiliary line A and the auxiliary line B as in the DC circuit breaker 1. It is only necessary for the procedure in the control device 100 in this case to be similar and equivalent to the above-described third operation. Accordingly, repeated detailed description of the procedure in the control device 100 will be omitted.

### [Operation of interrupting DC bus 70 in DC circuit breaker 3]

It is only necessary for the procedure of the control device 100 when the operation of interrupting the DC bus 70 in the DC circuit breaker 3 is performed to be similar and equivalent to the procedure of the control device 100 in the DC circuit breaker 1 in consideration of the above-described third operation. Accordingly, repeated detailed description of the procedure of the control device 100 when the DC bus 70 is interrupted in the DC circuit breaker 3 will be omitted.

According to such a configuration and procedure, in the DC circuit breaker 3, as in the DC circuit breaker 1, after the semiconductor breaker 80, which is costly to implement a high withstand voltage, is shared by all DC power transmission lines LN, when a fault has occurred in any one of the DC power transmission lines LN or the DC buses 70, the DC power transmission line LN or the DC bus 70 where the fault has occurred is interrupted and the DC power transmission by the DC power transmission line LN or the DC bus 70 where no fault has occurred is maintained. Also, in the DC circuit breaker 3, as in the DC circuit breaker 1, the semiconductor breaker 80 is also configured to interrupt the fault current in both directions, such that it is possible to interrupt the fault current flowing through the fault circuit regardless of the current state of the fault circuit and maintain the power transmission in a state in which steady power loss does not occur at the time of DC power transmission in the faultless circuit.

Moreover, in the DC circuit breaker 3, the commutation circuit 50 corresponding to both the auxiliary line A and the auxiliary line B is replaced with the commutation circuit 51. Thereby, in the DC circuit breaker 3, the direction of the current to be commutated in the auxiliary line A and the auxiliary line B (the direction in which the fault current flowing through the fault circuit can be interrupted) is unidirectional, but cost reduction may be implemented when the DC circuit breaker 3 is configured.

In the DC circuit breaker 3, as in the modification of the DC circuit breaker 1, a transmission line PL is also connected to the DC bus 70 and another device or other equipment such as the power converter 200 may be connected.

As described above, according to the DC circuit breaker 3 of the third embodiment, it is applied to a multi-terminal DC power transmission system and it is possible to interrupt the DC power transmission line LN or the DC bus 70 where a fault has occurred and maintain DC power transmission by the DC power transmission line LN or the DC bus 70 where no fault has occurred after the semiconductor breaker 80 (including the semiconductor breaker 80a or the semiconductor breaker 80b) is shared.

As described above, in the DC circuit breaker of each embodiment, in the DC circuit breaker configured at the node portion of the multi-terminal DC power transmission system, each DC power transmission line LN branches into the auxiliary line A and the auxiliary line B and the DC buses 70 corresponding to the auxiliary buses are connected via the shared semiconductor breaker 80 for interrupting the DC power transmission line LN where a fault has occurred. Also, in the DC circuit breaker of each embodiment, when a fault has occurred in any one of the DC power transmission lines LN or the DC buses 70, the control device controls the fault circuit by controlling the opening or closing of the breaker 30 and the disconnector 40 belonging to the auxiliary line of the fault circuit on the upstream side of the fault current and controlling the opening or closing of the breaker 30 and the disconnector 40 belonging to the auxiliary line of the faultless circuit on the downstream side of the fault current. Thereby, in the DC circuit breaker of each embodiment, the semiconductor breaker 80 for implementing a high withstand voltage is shared by all DC power transmission lines LN and therefore it is possible to implement cost reduction, interrupt a fault circuit, and maintain normal power transmission of a DC current by the faultless circuit.

According to at least one embodiment described above, a DC circuit breaker includes a plurality of DC power transmission lines (LN) each branching into a first auxiliary line (A) and a second auxiliary line (B) each having a first mechanical contact (40) at a predetermined branch point; an interruption and consumption unit including a semiconductor breaker (80) configured to interrupt a current flowing through the DC power transmission line and an energy consumption element (90) configured to consume at least energy between a first end of the semiconductor breaker and a second end opposite the first end; a plurality of opening and closing commutation units (30, 50, and 60) each corresponding to the first auxiliary line or the second auxiliary line; a first DC bus configured to connect a first terminal (a) of the first mechanical contact belonging to each first auxiliary line to a first end (i) of the interruption and consumption unit; and a second DC bus configured to connect a first terminal (a) of the first mechanical contact belonging to each second auxiliary line to a second end (j) opposite the first end of the interruption and consumption unit, whereby it is possible to interrupt a DC power transmission line where a fault occurs after the semiconductor breaker is shared.

### [Reference Signs List]

1, 1a, 1b, 2, 3 DC circuit breaker
10, 10-1, 10-2, 10-n Auxiliary disconnector
20, 20-1, 20-2, 20-n DC reactor
30, 30-A-1, 30-A-2, 30-A-n, 30-B-1, 30-B-2, 30-B-n Breaker
40, 40-A-1, 40-A-2, 40-A-n, 40-B-1, 40-B-2, 40-B-n Disconnector
50, 50-A-1, 50-A-2, 50-A-n, 50-B-1, 50-B-2, 50-B-n Commutation circuit
51, 51-A-1, 51-A-2, 51-A-n, 51-B-1, 51-B-2, 51-B-n Commutation circuit
60, 60-A-1, 60-A-2, 60-A-n, 60-B-1, 60-B-2, 60-B-n Inductor
70, 70-A, 70-B DC bus
80, 80a, 80b Semiconductor breaker
81, 81a, 81b Semiconductor switch unit
90, 90a, 90b Arrester
91 Arrester
100 Control device
200 Power converter
LN, LN-1, LN-2, LN-n DC power transmission line
PL Power transmission line

## Claims

1. A DC circuit breaker (1) comprising:
a plurality of DC power transmission lines (LN) each branching into a first auxiliary line (A) and a second auxiliary line (B) each having a first mechanical contact (40) at a predetermined branch point;
an interruption and consumption unit including a semiconductor breaker (80) configured to interrupt a current flowing through the DC power transmission line and an energy consumption element (90) configured to consume at least energy between a first end of the semiconductor breaker (80) and a second end opposite the first end;
a plurality of opening and closing commutation units (30, 50, 60) each corresponding to the first auxiliary line or the second auxiliary line;
a first DC bus (70) configured to connect a first terminal (a) of the first mechanical contact belonging to each first auxiliary line to a first end (i) of the interruption and consumption unit;
and a second DC bus configured to connect a first terminal (a) of the first mechanical contact belonging to each second auxiliary line to a second end (j) opposite the first end of the interruption and consumption unit.

2. The DC circuit breaker according to claim 1, wherein each of the opening and closing commutation units includes at least one second mechanical contact and a commutation circuit configured to selectively commutate a current flowing through the first auxiliary line or the second auxiliary line corresponding thereto to the interruption and consumption unit.

3. The DC circuit breaker according to claim 2, further comprising a control device configured to control the first mechanical contact, the interruption and consumption unit, and the opening and closing commutation unit,
wherein the control device sets both the first mechanical contact and the second mechanical contact in a closed state during a steady operation, and
wherein, when a fault has occurred in any DC power transmission line,
the control device sets the first mechanical contact and the second mechanical contact belonging to one of the first auxiliary line and the second auxiliary line of a fault circuit that is the DC power transmission line where the fault has occurred in an open state,
the control device sets the first mechanical contact, the second mechanical contact, or both belonging to the other of the first auxiliary line and the second auxiliary line of a faultless circuit that is the DC power transmission line other than the fault circuit in the open state, and
the control device subsequently causes the commutation circuit corresponding to the second mechanical contact set in the open state to be operated, sets a current of the second mechanical contact corresponding thereto in a substantial zero state, and sets a current flowing through the fault circuit in the substantial zero state by shifting a state of a current flowing through the semiconductor breaker to the substantial zero state after the semiconductor breaker is set in a conductive state.

4. The DC circuit breaker according to claim 3,
wherein the control device sets the first mechanical contact, the second mechanical contact, or both belonging to the other of the first auxiliary line and the second auxiliary line of the fault circuit in the open state after the current flowing through the fault circuit is set in the substantial zero state, and
wherein the first mechanical contact and the second mechanical contact set in the open state in the faultless circuit are set in a closed state.

5. The DC circuit breaker according to any one of claims 2 to 4, further comprising a control device configured to control the first mechanical contact, the interruption and consumption unit, and the opening and closing commutation unit,
wherein the control device sets both the first mechanical contact and the second mechanical contact in a closed state during a steady operation,
wherein, when a fault has occurred in one of the first DC bus and the second DC bus,
the control device sets the first mechanical contact and the second mechanical contact belonging to the first auxiliary line or the second auxiliary line connected to a DC bus where the fault has occurred in the open state, and
the control device subsequently causes the commutation circuit corresponding to the second mechanical contact set in the open state to be operated, sets a current of the second mechanical contact corresponding thereto in a substantial zero state, and sets a current flowing through the DC bus where the fault has occurred in the substantial zero state by shifting a state of a current flowing through the semiconductor breaker to the substantial zero state after the semiconductor breaker is set in a conductive state.

6. The DC circuit breaker according to any one of claims 2 to 5, wherein a transmission line is further connected to one or both of the first DC bus and the second DC bus.

7. The DC circuit breaker according to claim 6, wherein a power converter is connected to an opposite side of a location where one or both of the first DC bus and the second DC bus are connected on the transmission line.

8. The DC circuit breaker according to any one of claims 3 to 7,
wherein one of the first auxiliary line and the second auxiliary line is an auxiliary line of an upstream side of a current flowing due to a fault that has occurred, and
wherein the other of the first auxiliary line and the second auxiliary line is an auxiliary line of a downstream side of the current flowing due to the fault that has occurred.

9. The DC circuit breaker according to any one of claims 3 to 7,
wherein one of the first auxiliary line and the second auxiliary line is an auxiliary line of a downstream side of a current flowing due to a fault that has occurred, and
wherein the other of the first auxiliary line and the second auxiliary line is an auxiliary line of an upstream side of the current flowing due to the fault that has occurred.

10. The DC circuit breaker according to any one of claims 2 to 9, wherein the commutation circuit sets a current flowing through the second mechanical contact in a substantial zero state by changing an electric current value between both terminals of the second mechanical contact and disconnects an electrical connection between both terminals of the second mechanical contact.

11. The DC circuit breaker according to any one of claims 2 to 10, wherein the commutation circuit is a bridge circuit including a plurality of leg units having a semiconductor switch unit and at least one or more power storage elements.

12. The DC circuit breaker according to claim 11, wherein the leg unit is a series circuit in which a plurality of semiconductor switch units are connected together in series.

13. The DC circuit breaker according to claim 11 or 12, wherein the leg unit is a series circuit in which at least one or more semiconductor switch units and at least one or more current rectifier elements are connected together in series.

## Patentansprüche

1. Gleichstrom-Schutzschalter (1), umfassend:
eine Vielzahl von Gleichstrom-Übertragungsleitungen (LN), die sich jeweils in eine erste Hilfsleitung (A) und eine zweite Hilfsleitung (B) verzweigen, die jeweils einen ersten mechanischen Kontakt (40) an einem vorbestimmten Verzweigungspunkt aufweisen;
eine Unterbrechungs- und Verbrauchseinheit, die einen Halbleiterschalter (80), der dazu ausgestaltet ist, einen Strom, der durch die Gleichstrom-Übertragungsleitung fließt, zu unterbrechen, und ein Energieverbrauchselement (90) umfasst, das dazu ausgestaltet ist, zumindest Energie zwischen einem ersten Ende des Halbleiterschalters (80) und einem zweiten Ende zu verbrauchen, das dem ersten Ende entgegengesetzt ist;
mehrere Öffnungs- und Schließkommutierungseinheiten (30, 50, 60), die jeweils der ersten Hilfsleitung oder der zweiten Hilfsleitung entsprechen;
einen ersten Gleichstrombus (70), der dazu ausgestaltet ist, einen ersten Anschluss (a) des ersten mechanischen Kontakts, der zu jeder ersten Hilfsleitung gehört, mit einem ersten Ende (i) der Unterbrechungs- und Verbrauchseinheit zu verbinden;
und einen zweiten Gleichstrombus, der dazu ausgestaltet ist, einen ersten Anschluss (a) des ersten mechanischen Kontakts, der zu jeder zweiten Hilfsleitung gehört, mit einem zweiten Ende (j) der Unterbrechungs- und Verbrauchseinheit zu verbinden, das dem ersten Ende entgegengesetzt ist.

2. Gleichstrom-Schutzschalter nach Anspruch 1, wobei jede der Öffnungs- und Schließkommutierungseinheiten mindestens einen zweiten mechanischen Kontakt und eine Kommutierungsschaltung umfasst, die dazu ausgestaltet ist, einen Strom, der durch die erste Hilfsleitung oder die zweite Hilfsleitung fließt, die ihr entspricht, zur Unterbrechungs- und Verbrauchseinheit zu kommutieren.

3. Gleichstrom-Schutzschalter nach Anspruch 2, ferner umfassend eine Steuervorrichtung, die dazu ausgestaltet ist, den ersten mechanischen Kontakt, die Unterbrechungs- und Verbrauchseinheit und die Öffnungs- und Schließkommutierungseinheit zu steuern,
wobei die Steuervorrichtung sowohl den ersten mechanischen Kontakt als auch den zweiten mechanischen Kontakt während eines stetigen Betriebs in einen geschlossenen Zustand versetzt, und
wobei, wenn ein Fehler in einer beliebigen Gleichstrom-Übertragungsleitung aufgetreten ist,
die Steuervorrichtung den ersten mechanischen Kontakt und den zweiten mechanischen Kontakt, die zu einer von der ersten Hilfsleitung und der zweiten Hilfsleitung einer Fehlerschaltung gehören, welche die Gleichstrom-Übertragungsleitung ist, wo der Fehler aufgetreten ist, in einen offenen Zustand versetzt,
die Steuervorrichtung den ersten mechanischen Kontakt, den zweiten mechanischen Kontakt oder beide, die zu der anderen von der ersten Hilfsleitung und der zweiten Hilfsleitung einer fehlerfreien Schaltung gehören, welche die Gleichstrom-Übertragungsleitung ist, die sich von der Fehlerschaltung unterscheidet, in den offenen Zustand versetzt, und
die Steuervorrichtung anschließend veranlasst, dass die Kommutierungsschaltung, die dem zweiten mechanischen Kontakt entspricht, der in den offenen Zustand versetzt wurde, betätigt wird, einen Strom des zweiten mechanischen Kontakts, der ihr entspricht, in einen Zustand von im Wesentlichen Null versetzt und einen Strom, der durch die Fehlerschaltung fließt, durch Verschieben eines Zustands eines Stroms, der durch den Halbleiterschalter fließt, in den Zustand von im Wesentlichen Null in den Zustand von im Wesentlichen Null versetzt, nachdem der Halbleiterschalter in einen leitfähigen Zustand versetzt wurde.

4. Gleichstrom-Schutzschalter nach Anspruch 3,
wobei die Steuervorrichtung den ersten mechanischen Kontakt, den zweiten mechanischen Kontakt oder beide, die zu der anderen von der ersten Hilfsleitung und der zweiten Hilfsleitung der Fehlerschaltung gehören, in den offenen Zustand versetzt, nachdem der Strom, der durch die Fehlerschaltung fließt, in den Zustand von im Wesentlichen Null versetzt wurde, und
wobei der erste mechanische Kontakt und der zweite mechanische Kontakt, die in der fehlerfreien Schaltung in den offenen Zustand versetzt wurden, in einen geschlossenen Zustand versetzt werden.

5. Gleichstrom-Schutzschalter nach einem der Ansprüche 2 bis 4, ferner umfassend eine Steuervorrichtung, die dazu ausgestaltet ist, den ersten mechanischen Kontakt, die Unterbrechungs- und Verbrauchseinheit und die Öffnungs- und Schließkommutierungseinheit zu steuern,
wobei die Steuervorrichtung sowohl den ersten mechanischen Kontakt als auch den zweiten mechanischen Kontakt während eines steten Betriebs in einen geschlossenen Zustand versetzt,
wobei, wenn ein Fehler in einem von dem ersten Gleichstrombus und dem zweiten Gleichstrombus aufgetreten ist,
die Steuervorrichtung den ersten mechanischen Kontakt und den zweiten mechanischen Kontakt, die zu der ersten Hilfsleitung oder der zweiten Hilfsleitung gehören, die mit einem Gleichstrombus verbunden ist, wo der Fehler aufgetreten ist, in den offenen Zustand versetzt, und
die Steuervorrichtung anschließend veranlasst, dass die Kommutierungsschaltung, die dem zweiten mechanischen Kontakt entspricht, der in den offenen Zustand versetzt wurde, betätigt wird, einen Strom des zweiten mechanischen Kontakts, der ihr entspricht, in einen Zustand von im Wesentlichen Null versetzt, und einen Strom, der durch den Gleichstrombus fließt, wo der Fehler aufgetreten ist, durch Verschieben eines Zustands eines Stroms, der durch den Halbleiterschalter fließt, in den Zustand von im Wesentlichen Null in den Zustand von im Wesentlichen Null versetzt, nachdem der Halbleiterschalter in einen leitfähigen Zustand versetzt wurde.

6. Gleichstrom-Schutzschalter nach einem der Anspruche 2 bis 5, wobei eine Übertragungsleitung ferner mit einem oder beiden von dem ersten Gleichstrombus und dem zweiten Gleichstrombus verbunden ist.

7. Gleichstrom-Schutzschalter nach Anspruch 6, wobei ein Leistungswandler mit einer entgegengesetzten Seite einer Stelle verbunden ist, wo einer oder beide von dem ersten Gleichstrombus und dem zweiten Gleichstrombus auf der Übertragungsleitung verbunden ist bzw. sind.

8. Gleichstrom-Schutzschalter nach einem der Ansprüche 3 bis 7,
wobei eine von der ersten Hilfsleitung und der zweiten Hilfsleitung eine Hilfsleitung einer stromaufwärtigen Seite eines Stroms ist, der aufgrund eines Fehlers fließt, der aufgetreten ist, und
wobei die andere von der ersten Hilfsleitung und der zweiten Hilfsleitung eine Hilfsleitung einer stromabwärtigen Seite des Stroms ist, der aufgrund des Fehlers fließt, der aufgetreten ist.

9. Gleichstrom-Schutzschalter nach einem der Ansprüche 3 bis 7,
wobei eine von der ersten Hilfsleitung und der zweiten Hilfsleitung eine Hilfsleitung einer stromabwärtigen Seite eines Stroms ist, der aufgrund eines Fehlers fließt, der aufgetreten ist, und
wobei die andere von der ersten Hilfsleitung und der zweiten Hilfsleitung eine Hilfsleitung einer stromaufwärtigen Seite des Stroms ist, der aufgrund des Fehlers fließt, der aufgetreten ist.

10. Gleichstrom-Schutzschalter nach einem der Ansprüche 2 bis 9, wobei die Kommutierungsschaltung einen Strom, der durch den zweiten mechanischen Kontakt fließt, durch Ändern eines elektrischen Stromwerts zwischen beiden Anschlüssen des zweiten mechanischen Kontakts in einen Zustand von im Wesentlichen Null versetzt und eine elektrische Verbindung zwischen beiden Anschlüssen des zweiten mechanischen Kontakts trennt.

11. Gleichstrom-Schutzschalter nach einem der Ansprüche 2 bis 10, wobei die Kommutierungsschaltung eine Brückenschaltung ist, die mehrere Zweigeinheiten umfasst, die eine Halbleiterschaltereinheit und mindestens ein oder mehrere Leistungsspeicherelemente aufweist.

12. Gleichstrom-Schutzschalter nach Anspruch 11, wobei die Zweigeinheit eine Reihenschaltung ist, in der eine Vielzahl von Halbleiterschaltereinheiten miteinander in Reihe geschaltet sind.

13. Gleichstrom-Schutzschalter nach Anspruch 11 oder 12, wobei die Zweigeinheit eine Reihenschaltung ist, in der mindestens eine oder mehrere Halbleiterschaltereinheiten und mindestens ein oder mehrere Stromgleichrichterelemente miteinander in Reihe geschaltet sind.

## Revendications

1. Disjoncteur CC (1) comprenant :
une pluralité de lignes de transmission de puissance CC (LN), chacune d'elles se ramifiant en une première ligne auxiliaire (A) et une deuxième ligne auxiliaire (B) présentant chacune un premier contact mécanique (40) à un premier point de ramification prédéterminé ;
une unité d'interruption et de consommation incluant un disjoncteur à semi-conducteur (80) configuré pour interrompre un courant circulant dans la ligne de transmission de puissance CC et un élément de consommation d'énergie (90) configuré pour consommer au moins une énergie entre une première extrémité du disjoncteur à semi-conducteur (80) et une deuxième extrémité opposée à la première extrémité ;
une pluralité d'unités de commutation d'ouverture et de fermeture (30, 50, 60) correspondant chacune à la première ligne auxiliaire ou à la deuxième ligne auxiliaire ;
un premier bus CC (70) configuré pour connecter une première borne (a) du premier contact mécanique appartenant à chaque première ligne auxiliaire à une première extrémité (i) de l'unité d'interruption et de consommation ; et
un deuxième bus CC configuré pour connecter une première borne (a) du premier contact mécanique appartenant à chaque deuxième ligne auxiliaire à une deuxième extrémité (j) opposée à la première extrémité de l'unité d'interruption et de consommation.

2. Disjoncteur CC selon la revendication 1, dans lequel chacune des unités de commutation d'ouverture et de fermeture inclut au moins un deuxième contact mécanique et un circuit de commutation configuré pour commuter sélectivement un courant circulant dans la première ligne auxiliaire ou la deuxième ligne auxiliaire lui correspondant à l'unité d'interruption et de consommation.

3. Disjoncteur CC selon la revendication 2, comprenant en outre un dispositif de commande configuré pour commander le premier contact mécanique, l'unité d'interruption et de consommation, et l'unité de commutation d'ouverture et de fermeture,
dans lequel le dispositif de commande met à la fois le premier contact mécanique et le deuxième contact mécanique dans un état fermé au cours d'un fonctionnement régulier, et
dans lequel, lorsqu'un défaut est survenu dans n'importe quelle ligne de transmission de puissance CC,
le dispositif de commande met le premier contact mécanique et le deuxième contact mécanique appartenant à l'une de la première ligne auxiliaire et de la deuxième ligne auxiliaire d'un circuit de défaut qui est la ligne de transmission de puissance CC dans laquelle le défaut est survenu, dans un état ouvert,
le dispositif de commande met le premier contact mécanique, le deuxième contact mécanique ou les deux appartenant à l'autre de la première ligne auxiliaire et de la deuxième ligne auxiliaire d'un circuit sans défaut qui est la ligne de transmission de puissance CC autre que le circuit de défaut, dans l'état ouvert, et
le dispositif de commande amène ensuite le circuit de commutation correspondant au deuxième contact mécanique mis dans l'état ouvert à fonctionner, met un courant du deuxième contact mécanique lui correspondant dans un état sensiblement nul, et met un courant circulant dans le circuit de défaut dans l'état sensiblement nul en faisant passer un état d'un courant circulant dans le disjoncteur à semi-conducteur à l'état sensiblement nul après que le disjoncteur à semi-conducteur est mis dans un état conducteur.

4. Disjoncteur CC selon la revendication 3,
dans lequel le dispositif de commande met le premier contact mécanique, le deuxième contact mécanique ou les deux appartenant à l'autre de la première ligne auxiliaire et de la deuxième ligne auxiliaire du circuit de défaut dans l'état ouvert après que le courant circulant dans le circuit de défaut est mis dans l'état sensiblement nul, et
dans lequel le premier contact mécanique et le deuxième contact mécanique mis dans l'état ouvert dans le circuit sans défaut sont mis dans un état fermé.

5. Disjoncteur CC selon l'une quelconque des revendications 2 à 4, comprenant en outre un dispositif de commande configuré pour commander le premier contact mécanique, l'unité d'interruption et de consommation, et l'unité de commutation d'ouverture et de fermeture,
dans lequel le dispositif de commande met à la fois le premier contact mécanique et le deuxième contact mécanique dans un état fermé au cours d'un fonctionnement régulier,
dans lequel, lorsqu'un défaut est survenu dans l'un du premier bus CC et du deuxième bus CC,
le dispositif de commande met le premier contact mécanique et le deuxième contact mécanique appartenant à la première ligne auxiliaire ou à la deuxième ligne auxiliaire connectée à un bus CC où le défaut est survenu, dans l'état ouvert, et
le dispositif de commande amène ensuite le circuit de commutation correspondant au deuxième contact mécanique mis dans l'état ouvert à fonctionner, met un courant du deuxième contact mécanique lui correspondant dans un état sensiblement nul, et met un courant circulant dans le bus CC où le défaut est survenu dans l'état sensiblement nul en faisant passer un état d'un courant circulant dans le disjoncteur à semi-conducteur dans l'état sensiblement nul après que le disjoncteur à semi-conducteur est mis dans un état conducteur.

6. Disjoncteur CC selon l'une quelconque des revendications 2 à 5, dans lequel une ligne de transmission est en outre connectée à l'un ou aux deux du premier bus CC et du deuxième bus CC.

7. Disjoncteur CC selon la revendication 6, dans lequel un convertisseur de puissance est connecté à un côté opposé d'un emplacement auquel l'un ou les deux du premier bus CC et du deuxième bus CCF sont connectés sur la ligne de transmission.

8. Disjoncteur CC selon l'une quelconque des revendications 3 à 7,
dans lequel l'une de la première ligne auxiliaire et de la deuxième ligne auxiliaire est une ligne auxiliaire d'un côté amont d'un courant circulant sous l'effet d'un défaut qui est survenu, et
dans lequel l'autre de la première ligne auxiliaire et de la deuxième ligne auxiliaire est une ligne auxiliaire d'un côté aval du courant circulant sous l'effet du défaut qui est survenu.

9. Disjoncteur CC selon l'une quelconque des revendications 3 à 7,
dans lequel l'une de la première ligne auxiliaire et de la deuxième ligne auxiliaire est une ligne auxiliaire d'un côté aval d'un courant circulant sous l'effet d'un défaut qui est survenu, et
dans lequel l'autre de la première ligne auxiliaire et de la deuxième ligne auxiliaire est une ligne auxiliaire d'un côté amont du courant circulant sous l'effet du défaut qui est survenu.

10. Disjoncteur CC selon l'une quelconque des revendications 2 à 9, dans lequel le circuit de commutation met un courant circulant dans le deuxième contact mécanique dans un état sensiblement nul en changeant une valeur de courant électrique entre les deux bornes du deuxième contact mécanique et déconnecte une connexion électrique entre les deux bornes du deuxième contact mécanique.

11. Disjoncteur CC selon l'une quelconque des revendications 2 à 10, dans lequel le circuit de commutation est un circuit de pont incluant une pluralité d'unités de branche présentant une unité de commutation à semi-conducteur et au moins un ou plusieurs éléments de stockage de puissance.

12. Disjoncteur CC selon la revendication 11, dans lequel l'unité de branche est un circuit en série dans lequel une pluralité d'unités de commutation à semi-conducteur sont connectées les unes aux autres en série.

13. Disjoncteur CC selon la revendication 11 ou 12, dans lequel l'unité de branche est un circuit en série dans lequel au moins une ou plusieurs unités de commutation à semi-conducteur et au moins un ou plusieurs éléments redresseurs de courant sont connectés les uns aux autres en série.
